# EUROPEAN PATENT APPLICATION

(11) **EP 4 741 115 A1**
(43) Date of publication of application: **13.05.2026**
(21) Application number: 23944454.0
(22) Date of filing: 06.07.2023
(51) Int. Cl.: B25J 11/00, B25J 5/00, B25J 9/00, B25J 13/08, B25J 19/02, B62B 5/00

(54) **ROBOT EQUIPPED WITH SENSOR DEVICE**

(71) Applicant: Bear Robotics Korea, Inc., Seoul 04779 (KR)
(72) Inventor: SHIN, Jiyong, Seoul 06772 (KR); IM, Sanghyuk, Seoul 06772 (KR); PARK, Juhyun, Seoul 06772 (KR); HAN, Jongbeom, Seoul 06772 (KR); CHEON, Jeeyoung, Seoul 06772 (KR)
(74) Representative: Murgitroyd & Company
(86) International application number: PCT/KR2023/009575
(87) International publication number: WO 2025/009638

(57) **Abstract**

A robot equipped with a sensor device is disclosed. The robot equipped with a sensor device, according to an embodiment of the present invention, is a robot for transporting a rolltainer, and comprises a robot body and a sensor device. The sensor device is disposed in the robot body. In addition, the sensor device according to an embodiment of the present invention comprises a length extension module and an obstacle sensor. The length of the length extension module is extended in one direction. The obstacle sensor is disposed in the length extension module. If a rolltainer is fastened to the robot body, a driving assembly provided in the sensor device is operated.

## Description

### TECHNICAL FIELD

The present disclosure relates to a robot including a sensor device.

### BACKGROUND

A robot may transport goods using a rolltainer.

Coupling methods by which a rolltainer is coupled to a robot include a fixed type and a towing type.

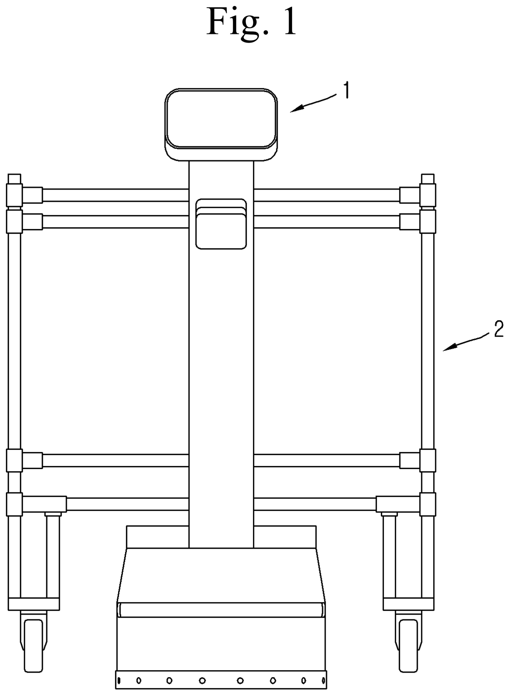

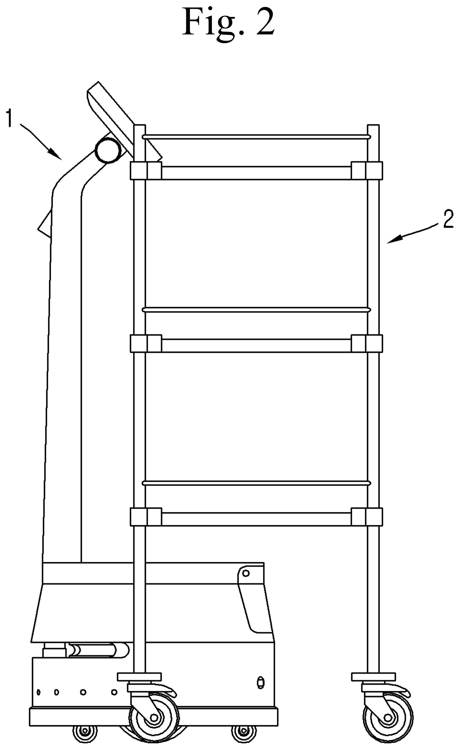

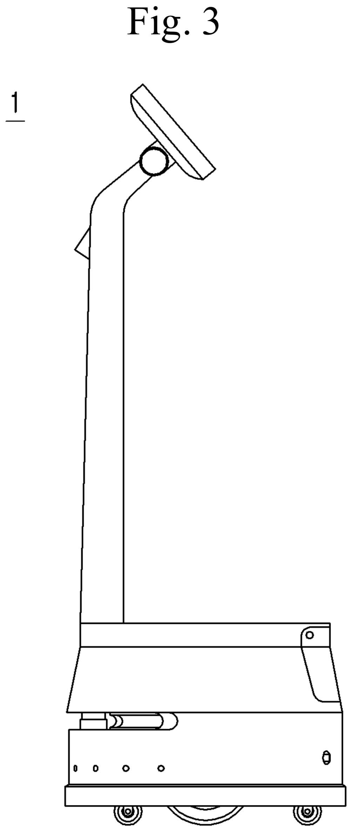

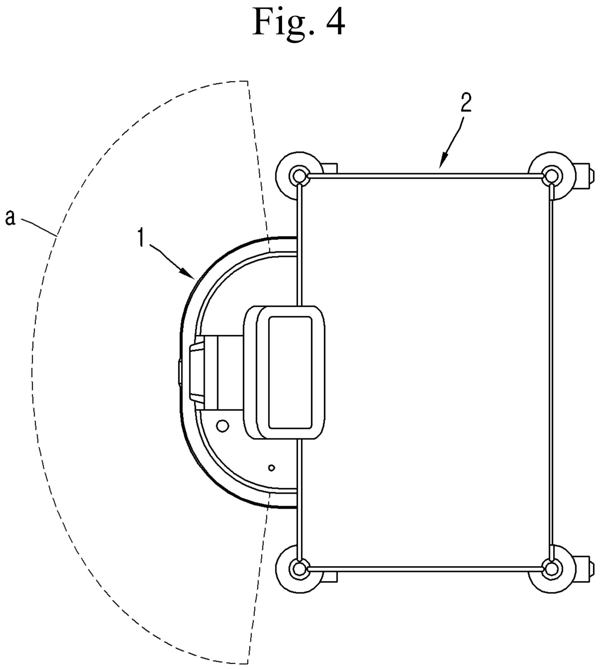

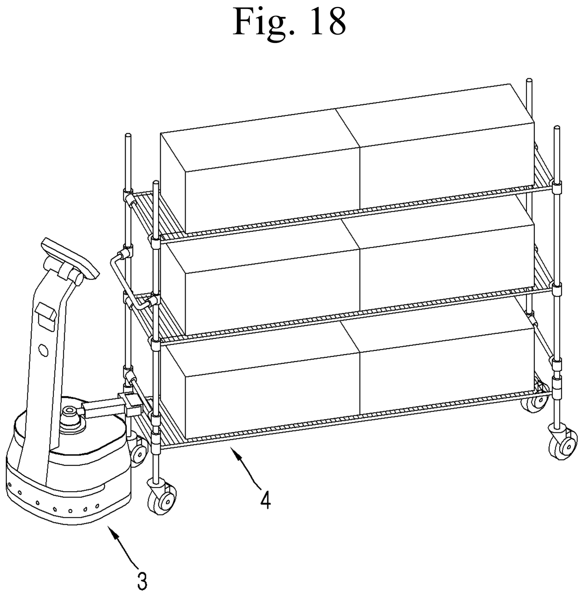

FIGS. 1 to 4 illustrate examples in which a robot and a rolltainer are coupled in the fixed type, and FIG. 18 illustrates an example in which a robot and a rolltainer are coupled in the towing type. In FIGS. 1 to 4, reference numeral 1 denotes a robot, and reference numeral 2 denotes a rolltainer. In FIG. 4, reference symbol a denotes a sensing area sensed by a sensor mounted on the robot.

When a rolltainer is coupled to a robot in the fixed type, the rolltainer is fixed to the robot, and the robot and the rolltainer move integrally. When a rolltainer is coupled to a robot in the towing type, the rolltainer is capable of rotating while being coupled to the robot.

In general, a rolltainer is larger in size than a robot.

When a rolltainer having a relatively large size is coupled to a robot having a relatively small size, the rolltainer blocks a sensing area of a sensor (for example, an obstacle detection sensor) mounted on the robot. As a result, the robot may collide with an obstacle around the robot, or the sensor may recognize the rolltainer mounted on the robot as an obstacle.

Therefore, a device capable of expanding a sensing area of a sensor mounted on a robot is required.

### DISCLOSURE

### TECHNICAL PROBLEM

An object of the present disclosure is to provide a robot including a sensor device.

Another object of the present disclosure is to provide a sensor device including a length extension module.

A further object of the present disclosure is to provide a length extension module having an extendable length.

### TECHNICAL SOLUTION

The above-described objects of the present disclosure are achieved by the detailed description provided below.

A robot according to examples of implementation states of the present disclosure is a robot configured to transport a rolltainer. The robot includes a robot body and a sensor device. The sensor device is disposed on the robot body. In addition, the sensor device according to examples of implementation states of the present disclosure includes a length extension module and an obstacle sensor. The length extension module is configured to extend a length in one direction. The obstacle sensor is disposed on the length extension module. When the rolltainer is coupled to the robot body, a driving assembly provided in the sensor device is configured to operate.

The length extension module according to examples of implementation states of the present disclosure includes a fixing plate, a first moving plate, a second moving plate, and a driving assembly. The first moving plate is connected to the fixing plate and configured to move. The second moving plate is connected to the first moving plate and configured to move. The driving assembly is configured to move the first moving plate in one direction. When the first moving plate moves in the one direction, the second moving plate is configured to move in the one direction.

Specifically, a first moving plate belt assembly is disposed on the first moving plate. One side of a first moving plate belt provided in the first moving plate belt assembly is connected to the fixing plate, and the other side of the first moving plate belt is connected to the second moving plate.

Specifically, the first moving plate belt assembly is disposed on a one-side plate of the first moving plate. The one-side plate of the first moving plate is located between bent portions that are formed to be spaced apart from an upper end in a vertical direction by a predetermined distance.

Specifically, a fixing plate guide rail is disposed on the fixing plate, and a first moving plate guide block is disposed on the first moving plate. The first moving plate guide block is configured to move along the fixing plate guide rail.

Specifically, a first moving plate guide rail is disposed on the first moving plate, and a second moving plate guide block is disposed on the second moving plate. The second moving plate guide block is configured to move along the first moving plate guide rail.

The length extension module according to examples of implementation states of the present disclosure further includes a third moving plate. The third moving plate is connected to the second moving plate and configured to move. When the second moving plate moves in the one direction, the third moving plate is configured to move in the one direction.

Specifically, the obstacle sensor is disposed on one end portion of the second moving plate or one end portion of the third moving plate.

Specifically, a second moving plate belt assembly is disposed on the second moving plate. One side of a second moving plate belt provided in the second moving plate belt assembly is connected to the first moving plate, and the other side of the second moving plate belt is connected to the third moving plate.

Specifically, the second moving plate includes a first bent portion, a second bent portion, and a third bent portion that are sequentially formed from an upper side toward a lower side. The second moving plate belt assembly is disposed between the third bent portion and a lower end of the second moving plate.

Specifically, a second moving plate guide rail is disposed on the second moving plate, and a third moving plate guide block is disposed on the third moving plate. The third moving plate guide block is configured to move along the second moving plate guide rail.

Specifically, the third moving plate includes a first bent portion and a second bent portion that are sequentially formed from an upper side toward a lower side. The third moving plate guide block is disposed between an upper end of the third moving plate and the first bent portion.

Specifically, the driving assembly includes a motor and a motor gear connected to a rotation shaft of the motor. In addition, the first moving plate includes an other-side plate gear connected to the motor gear. When the motor gear rotates by driving of the motor, the other-side plate gear is configured to move in the one direction.

Specifically, the driving assembly further includes a moving plate gear connected to the motor gear. The moving plate gear is configured to mesh with the other-side plate gear.

Specifically, a plurality of length extension modules are provided. The plurality of length extension modules include a first length extension module and a second length extension module. The first length extension module and the second length extension module are disposed in a vertical direction with a moving plate gear of the driving assembly interposed therebetween. When the moving plate gear rotates, a first moving plate of the first length extension module is configured to move in the one direction, and a first moving plate of the second length extension module is configured to move in a direction opposite to the one direction.

Specifically, the sensor device is rotatably coupled to the robot body. A housing of the sensor device includes a sensor device placement portion, a housing protrusion, and a rolltainer connection groove. The sensor device is disposed on the sensor device placement portion. The housing protrusion is rotatably coupled to a coupling portion provided in the robot body. The rolltainer connection groove is formed at a position facing the sensor device placement portion, and a connection portion of the rolltainer is inserted and disposed in the rolltainer connection groove. When the rolltainer rotates, the rolltainer connection portion is configured to press side walls of the rolltainer connection groove, and the housing protrusion is configured to rotate by the pressing.

Specifically, one or more bearings are disposed between an outer circumferential surface of the housing protrusion and an inner circumferential surface of the coupling portion provided in the robot body.

Specifically, the sensor device includes a sensor motor connected to the obstacle sensor. The obstacle sensor is configured to rotate by driving of the sensor motor.

Specifically, an obstacle detection sensor is disposed on a front surface of the robot body.

### ADVANTAGEOUS EFFECTS

A robot including a sensor device according to examples of implementation states of the present disclosure includes the sensor device according to examples of implementation states of the present disclosure, thereby providing an effect of preventing collision with an obstacle.

In addition, a sensor device according to examples of implementation states of the present disclosure includes a length extension module according to examples of implementation states of the present disclosure, thereby providing an effect of expanding a sensing area of a sensor.

In addition, a length extension module according to examples of implementation states of the present disclosure provides an effect of extending a length of the module by using a motor.

### BRIEF DESCRIPTION OF THE DRAWINGS

FIGS. 1 to 4 illustrate a conventional robot transporting a rolltainer.
FIG. 5 illustrates a robot of the present disclosure.
FIG. 6 illustrates a length extension module of the present disclosure.
FIG. 7 is an exploded perspective view of the length extension module of FIG. 6 as viewed from one direction.
FIG. 8 is an exploded perspective view of the length extension module of FIG. 6 as viewed from another direction.
FIG. 9 illustrates a first moving plate.
FIG. 10 illustrates a second moving plate.
FIG. 11 illustrates a third moving plate.
FIG. 12 illustrates movement of a first moving plate belt assembly.
FIG. 13 illustrates movement of a fixing plate, a first moving plate, and a second moving plate.
FIG. 14 illustrates movement of a fixing plate, a first moving plate, a second moving plate, and a third moving plate.
FIG. 15 is a side view of a length extension module of the present disclosure.
FIG. 16 is a schematic view illustrating movement of FIG. 15.
FIG. 17 illustrates sensing areas of a robot and a sensor device of the present disclosure.
FIG. 18 illustrates a conventional towing-type robot.
FIG. 19 illustrates curved travel of the towing-type robot of FIG. 18.
FIG. 20 illustrates a robot to which a housing of a sensor device of the present disclosure is applied.
FIG. 21 illustrates the housing of the sensor device shown in FIG. 20.
FIG. 22 illustrates rotation of a sensor provided in a sensor device.

### DETAILED DESCRIPTION

Hereinafter, examples of implementation states of the present disclosure are described in more detail with reference to the accompanying drawings. Among components of the present disclosure, components that are well known to a person having ordinary skill in the art based on the related art are not described in detail in order to avoid obscuring the gist of the present disclosure.

The present disclosure relates to a robot including a sensor device.

A robot of the present disclosure includes a sensor device, and the sensor device includes a length extension module.

Hereinafter, a length extension module according to examples of implementation states of the present disclosure is described first. Then, a sensor device including the length extension module of the present disclosure is described. Then, a robot including the sensor device of the present disclosure is described.

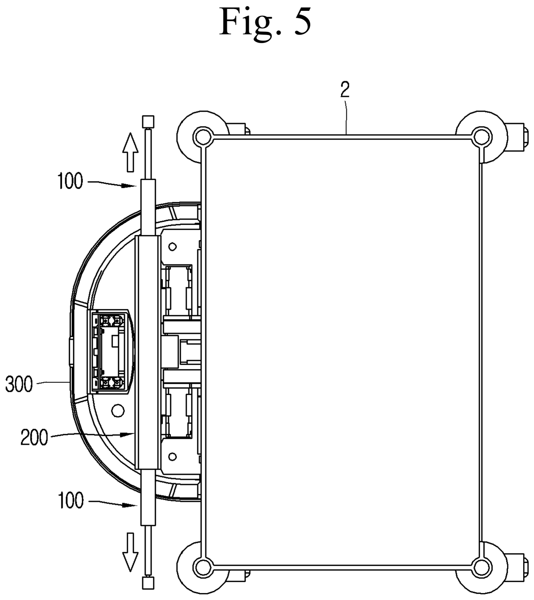

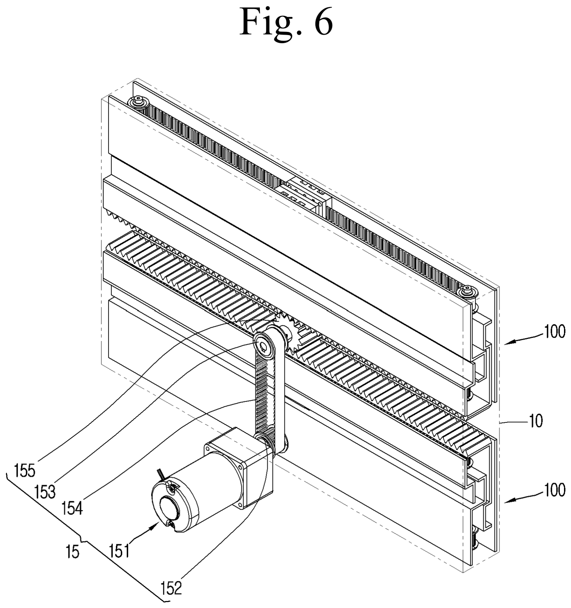

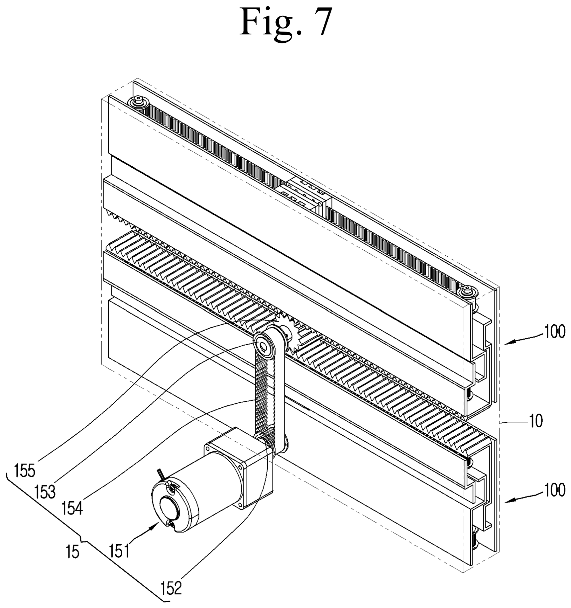

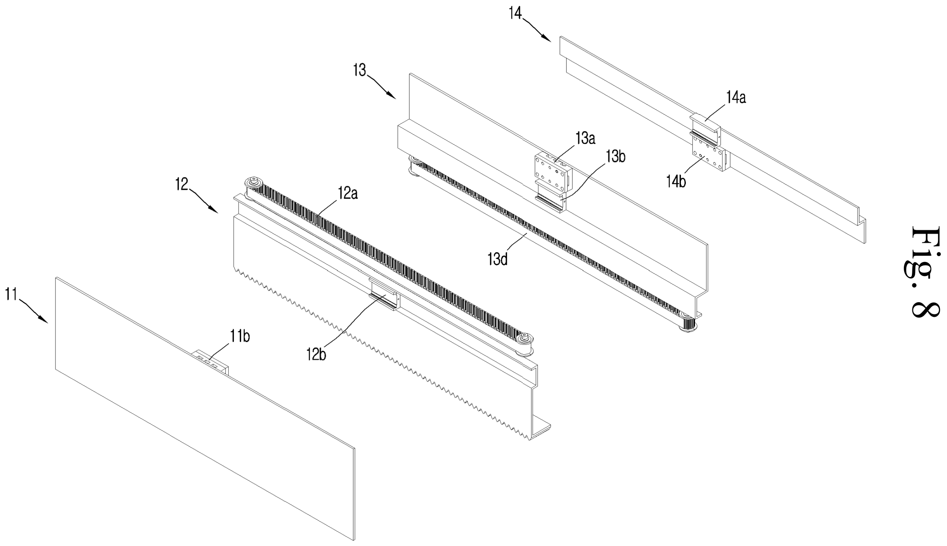

Referring to FIGS. 5 to 11, a length extension module 100 according to examples of implementation states of the present disclosure includes a housing 10, a fixing plate 11, a first moving plate 12, a second moving plate 13, a first moving plate belt assembly 12a, and a driving assembly 15. FIG. 6 illustrates that two length extension modules 100 are arranged at an upper side and a lower side, respectively. The length extension module 100 of the present disclosure may be used as a single module.

### [Description of housing 10]

The housing 10 forms an exterior appearance of the length extension module 100 of the present disclosure.

The housing 10 is not limited to a specific shape, and may be formed to have an opening (reference numeral not assigned) in which one side (for example, a left side) and/or the other side (for example, a right side) is opened.

Through the opening, a moving plate described below may move to the outside of the housing 10.

The housing 10 has a predetermined length in one direction (for example, a horizontal direction).

The housing 10 has an internal space. The fixing plate 11, the first moving plate 12, the second moving plate 13, and a belt assembly are accommodated (or disposed) in the space.

### [Description of fixing plate 11]

The fixing plate 11 may be a separate component independent of the housing 10. Alternatively, the fixing plate 11 may be one side wall constituting the housing 10. In other words, one side wall of the housing 10 may perform a role of the fixing plate 11.

When the fixing plate 11 is a separate component independent of the housing 10, the fixing plate 11 is disposed inside the housing 10 and fixed therein. For example, a fixing method may be that the fixing plate 11 is fixed to an inner surface of the housing 10 by a fastening member such as a screw or by an adhesive.

The fixing plate 11 is formed in a plate shape having a horizontal length, a vertical length, and a thickness.

When a longer side of the fixing plate 11 is disposed in a horizontal direction, the horizontal length of the fixing plate 11 is formed to be longer than the vertical length.

In the present disclosure, the fixing plate 11 is described on an assumption that the longer side of the fixing plate 11 is disposed in the horizontal direction and a shorter side of the fixing plate 11 is disposed in a vertical direction. In addition, a direction indicated by the longer side of the fixing plate 11 is defined as the horizontal direction, a direction indicated by the shorter side of the fixing plate 11 is defined as the vertical direction, and a direction indicated by the thickness of the fixing plate 11 is defined as a thickness direction.

That is, the longer side of the fixing plate 11 is parallel to the horizontal direction, the shorter side of the fixing plate 11 is parallel to the vertical direction, and the thickness direction of the fixing plate 11 is a direction orthogonal to the horizontal direction and the vertical direction, respectively.

The length extension module 100 of the present disclosure includes a fixing plate guide rail 11a disposed on the fixing plate 11 and a fixing plate belt connection member 11b.

The fixing plate guide rail 11a is formed in a rod shape having a predetermined length in one direction.

The fixing plate guide rail 11a is disposed in the horizontal direction on one surface of the fixing plate 11.

The fixing plate guide rail 11a is fixed to one surface of the fixing plate 11. Specifically, the fixing plate guide rail 11a may be fixed to one surface of the fixing plate 11 by a fastening member such as a screw.

A first moving plate guide block 12b disposed on the first moving plate 12 described below is movably disposed on the fixing plate guide rail 11a. The first moving plate guide block 12b may reciprocate in a length direction of the fixing plate guide rail 11a while being coupled to the fixing plate guide rail 11a.

The fixing plate belt connection member 11b is fixed to one surface of the fixing plate 11. Specifically, the fixing plate belt connection member 11b may be fixed to one surface of the fixing plate 11 by a fastening member such as a screw.

The fixing plate belt connection member 11b is connected to a first moving plate belt 12a1 disposed on the first moving plate 12, which will be described below. The fixing plate belt connection member 11b and the first moving plate belt 12a1 are fixed to each other.

The fixing plate belt connection member 11b is not limited to a specific shape, and may be formed in various shapes as long as one portion of the fixing plate belt connection member 11b is fixed to the fixing plate 11 and another portion is fixed to the first moving plate belt 12a1.

The fixing plate guide rail 11a and the fixing plate belt connection member 11b are disposed on one surface of the fixing plate 11 with a predetermined spacing. Specifically, as illustrated in the drawings, the fixing plate belt connection member 11b may be disposed above the fixing plate guide rail 11a on one surface of the fixing plate 11. Accordingly, the first moving plate belt assembly 12a connected to the fixing plate belt connection member 11b and the first moving plate 12 connected to the fixing plate guide rail 11a are prevented from interfering with or contacting each other.

The fixing plate 11 is connected to the first moving plate 12.

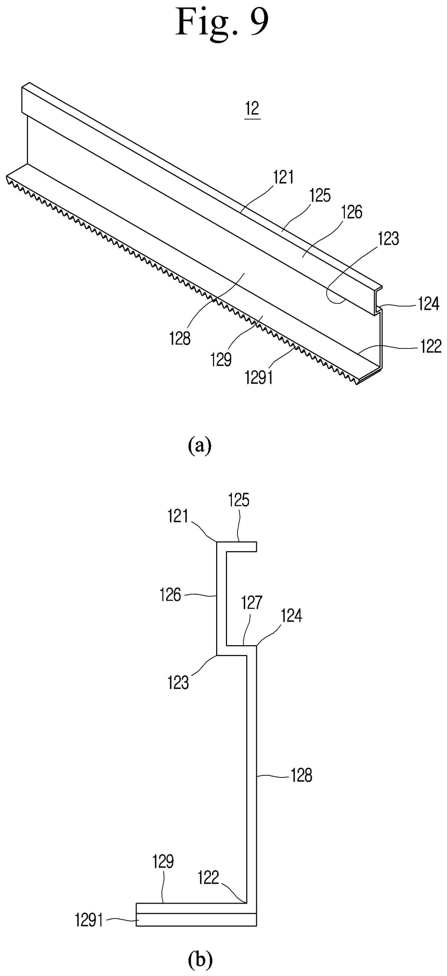

### [Description of the moving plate 12 (see FIG. 9)]

The first moving plate 12 may move in one direction. Here, the one direction may be a horizontal direction.

As the first moving plate 12 moves in the one direction, a length of the length extension module 100 is extended in the one direction. Here and hereinafter, the term "extension" should be understood to include elongation.

The first moving plate 12 is formed in a plate shape having a horizontal length, a vertical length, and a thickness.

When a longer side of the first moving plate 12 is disposed in the horizontal direction, the horizontal length of the first moving plate 12 is formed to be longer than the vertical length.

In the present disclosure, the first moving plate 12 is described on an assumption that the longer side of the first moving plate 12 is disposed in the horizontal direction and a shorter side of the first moving plate 12 is disposed in the vertical direction. In addition, a direction indicated by the longer side of the first moving plate 12 is defined as the horizontal direction, a direction indicated by the shorter side of the first moving plate 12 is defined as the vertical direction, and a direction indicated by the thickness of the first moving plate 12 is defined as the thickness direction.

That is, the longer side of the first moving plate 12 is disposed to be parallel to the horizontal direction, and the shorter side of the first moving plate 12 is disposed to be parallel to the vertical direction. In this case, the thickness direction of the first moving plate 12 is a direction orthogonal to the horizontal direction and the vertical direction, respectively.

The first moving plate 12 includes one surface and another surface opposite to the one surface.

One surface of the first moving plate 12 faces one surface of the fixing plate 11. That is, the one surface of the first moving plate 12 and the one surface of the fixing plate 11 are disposed to face each other.

The first moving plate 12 is disposed on one side of the fixing plate 11.

The first moving plate 12 is spaced apart from the fixing plate 11 by a predetermined distance.

The first moving plate 12 includes one side in the vertical direction and another side opposite thereto. The one side of the first moving plate 12 may be disposed to face upward, and the other side of the first moving plate 12 may be disposed to face downward.

According to examples of implementation states, the first moving plate 12 may have a plurality of bent portions.

The plurality of bent portions include a first bent portion 121 and a second bent portion 122.

The first bent portion 121 is formed at a position spaced apart from one end of the first moving plate 12 toward the other end by a predetermined distance. The first bent portion 121 is formed entirely from a left end to a right end of the first moving plate 12.

Due to the first bent portion 121, a portion of the first moving plate 12 from one end of the first moving plate 12 to the first bent portion 121 faces the fixing plate 11. The portion of the first moving plate 12 from the one end of the first moving plate 12 to the first bent portion 121 may be referred to as a one-side plate 125.

The second bent portion 122 is formed at a position spaced apart from the first bent portion 121 by a predetermined distance in the vertical direction.

In addition, the second bent portion 122 is formed at a position spaced apart from the other end of the first moving plate 12 toward the one end by a predetermined distance. The second bent portion 122 is formed entirely from the left end to the right end of the first moving plate 12.

Due to the second bent portion 122, a portion of the first moving plate 12 from the other end of the first moving plate 12 to the second bent portion 122 faces a direction opposite to a direction facing the fixing plate 11 (that is, a direction opposite to a direction faced by the one-side plate). The portion of the first moving plate 12 from the other end of the first moving plate 12 to the second bent portion 122 may be referred to as an other-side plate 129.

Due to the first bent portion 121 and the second bent portion 122, the one-side plate 125 and the other-side plate 129 of the first moving plate 12 face directions opposite to each other.

According to examples of implementation states of the present disclosure, a third bent portion 123 and a fourth bent portion 124 may be formed between the first bent portion 121 and the second bent portion 122. That is, in the first moving plate 12, the first bent portion 121, the third bent portion 123, the fourth bent portion 124, and the second bent portion 122 are formed sequentially in a vertical order.

The third bent portion 123 is formed on a side of the first bent portion 121 and is formed at a position spaced apart from the first bent portion 121 downward by a predetermined distance.

The fourth bent portion 124 is formed at a position spaced apart from the third bent portion 123 downward by a predetermined distance.

In addition, the fourth bent portion 124 is formed on a side of the second bent portion 122 and is formed at a position spaced apart from the second bent portion 122 upward by a predetermined distance.

The third bent portion 123 and the fourth bent portion 124 are formed entirely from the left end to the right end of the first moving plate 12.

The third bent portion 123 and the fourth bent portion 124 are bent in directions opposite to each other. For example, when the third bent portion 123 is bent in the clockwise direction, the fourth bent portion 124 is bent in the counterclockwise direction.

Due to the third bent portion 123 and the fourth bent portion 124, a portion of the first moving plate 12 from the third bent portion 123 to the fourth bent portion 124 faces the fixing plate 11. The portion of the first moving plate 12 from the third bent portion 123 to the fourth bent portion 124 (that is, between the third bent portion 123 and the fourth bent portion 124) may be referred to as an intermediate plate 127.

That is, due to the third bent portion 123 and the fourth bent portion 124, the one-side plate 125 and the intermediate plate 127 of the first moving plate 12 face the fixing plate 11, and the other-side plate 129 of the first moving plate 12 faces a direction opposite to the direction facing the fixing plate 11.

In summary, a plurality of bent portions are formed in the first moving plate 12, and the first bent portion 121, the third bent portion 123, the fourth bent portion 124, and the second bent portion 122 are formed (or disposed) sequentially in the vertical order.

A portion of the first moving plate 12 from the first bent portion 121 to the third bent portion 123 may be referred to as a one-side intermediate plate 126, and a portion of the first moving plate 12 from the fourth bent portion 124 to the second bent portion 122 may be referred to as an other-side intermediate plate 128.

Accordingly, the first moving plate 12 may be divided into the one-side plate 125 (from the one end to the first bent portion 121), the one-side intermediate plate 126 (from the first bent portion 121 to the third bent portion 123), the intermediate plate 127 (from the third bent portion 123 to the fourth bent portion 124), the other-side intermediate plate 128 (from the fourth bent portion 124 to the second bent portion 122), and the other-side plate 129 (from the second bent portion 122 to the other end) in the vertical order.

On the other-side plate 129 of the first moving plate 12, grooves at equal intervals, similar to those of a gear, may be formed (or disposed) from the left end to the right end. The grooves at equal intervals formed (or disposed) on the other-side plate 129 of the first moving plate 12 may be referred to as an other-side plate gear 1291.

The other-side plate gear 1291 may be formed integrally with the other-side plate 129 on a lower surface of the other-side plate 129. Alternatively, the other-side plate gear 1291 may be manufactured separately from the other-side plate 129 and coupled to the lower surface of the other-side plate 129.

The other-side plate gear 1291 is a gear that moves rather than a gear that rotates.

The grooves of the other-side plate gear 1291 are formed such that the first moving plate 12 may move in the horizontal direction.

A length of the other-side plate gear 1291, that is, a length in which the other-side plate gear 1291 is formed in the horizontal direction on the other-side plate 129, depends on a moving distance of the first moving plate 12.

The length extension module 100 of the present disclosure includes the first moving plate belt assembly 12a, the first moving plate guide block 12b, and a first moving plate guide rail 12c disposed on the first moving plate 12.

The first moving plate belt assembly 12a is disposed on the one-side plate 125 of the first moving plate 12. Specifically, the first moving plate belt assembly 12a is disposed on the one-side plate 125 of the other surface of the first moving plate 12.

The first moving plate belt assembly 12a connects the fixing plate 11 and the second moving plate 13 as described below.

The first moving plate belt assembly 12a includes the first moving plate belt 12a1 and a first moving plate pulley 12a2.

The first moving plate belt 12a1 is connected to the first moving plate pulley 12a2. A known belt may be applied as the first moving plate belt 12a1 of the present disclosure.

Grooves at equal intervals, similar to those of a gear, may be formed in the first moving plate belt 12a1.

The first moving plate pulley 12a2 includes a pulley rotation shaft (reference numeral not assigned) and a pulley body (reference numeral not assigned). A known pulley may be applied as the first moving plate pulley 12a2 of the present disclosure.

The pulley rotation shaft is disposed at a central portion of the pulley body.

The pulley body is rotatably coupled to the pulley rotation shaft. That is, while being coupled to the pulley rotation shaft, the pulley body may rotate about the pulley rotation shaft as a rotation axis.

Grooves at the same intervals as the grooves formed in the first moving plate belt 12a1 may be formed on an outer circumferential surface of the pulley body such that the grooves mesh with the grooves formed in the first moving plate belt 12a1.

Two first moving plate pulleys 12a2 are provided.

The first moving plate belt 12a1 is coupled to the two first moving plate pulleys 12a2. Accordingly, the two first moving plate pulleys 12a2 are connected by the first moving plate belt 12a1.

Specifically, the first moving plate belt 12a1 is coupled to pulley bodies of the two first moving plate pulleys 12a2, respectively, thereby connecting the two first moving plate pulleys 12a2.

The two first moving plate pulleys 12a2 are disposed on the one-side plate 125 of the first moving plate 12 with a predetermined distance therebetween.

One first moving plate pulley 12a21 of the two first moving plate pulleys 12a2 is disposed on a left end side of the one-side plate 125 of the first moving plate 12. Here, the left end side refers to a left end or a location adjacent to the left end. One end of a pulley rotation shaft of the one first moving plate pulley 12a21 is fixed to the one-side plate 125 of the first moving plate 12, and a pulley body of the one first moving plate pulley 12a21 may rotate while being coupled to the pulley rotation shaft and the first moving plate belt 12a1.

The other first moving plate pulley 12a22 of the two first moving plate pulleys 12a2 is disposed on a right end side of the one-side plate 125 of the first moving plate 12. Here, the right end side refers to a right end or a location adjacent to the right end. One end of a pulley rotation shaft of the other first moving plate pulley 12a22 is fixed to the one-side plate 125 of the first moving plate 12, and a pulley body of the other first moving plate pulley 12a22 may rotate while being coupled to the pulley rotation shaft and the first moving plate belt 12a1.

One side of the first moving plate belt 12a1 is fixed to the fixing plate belt connection member 11b disposed on the fixing plate 11. The other side of the first moving plate belt 12a1 is fixed to a second moving plate belt connection member 13a disposed on the second moving plate 13 described below.

The first moving plate guide block 12b is movably coupled to the fixing plate guide rail 11a disposed (or mounted) on the fixing plate 11.

When the first moving plate 12 reciprocates in the horizontal direction, the first moving plate guide block 12b may reciprocate in the length direction of the fixing plate guide rail 11a while being coupled to the fixing plate guide rail 11a disposed on the fixing plate 11. The fixing plate guide rail 11a performs a role of guiding movement of the first moving plate 12.

The first moving plate guide block 12b is not limited to a specific shape. Any shape may be applied to the first moving plate guide block 12b as long as the first moving plate guide block 12b is capable of reciprocating in the length direction of the fixing plate guide rail 11a while being coupled to the fixing plate guide rail 11a.

The first moving plate guide block 12b is disposed and fixed on one surface of the first moving plate 12. Specifically, the first moving plate guide block 12b is disposed and fixed on the one-side intermediate plate 126 of the one surface of the first moving plate 12. The first moving plate guide block 12b may be fixed by a fastening member such as a screw.

The first moving plate guide rail 12c is formed in a rod shape having a predetermined length in one direction.

The first moving plate guide rail 12c is disposed and fixed in the horizontal direction on the other surface of the first moving plate 12. Specifically, the first moving plate guide rail 12c is disposed and fixed on the one-side intermediate plate 126 of the other surface of the first moving plate 12. The first moving plate guide rail 12c may be fixed by a fastening member such as a screw.

A second moving plate guide block 13b disposed on the second moving plate 13 described below is movably disposed on the first moving plate guide rail 12c. While being coupled to the first moving plate guide rail 12c, the second moving plate guide block 13b may reciprocate in a length direction of the first moving plate guide rail 12c.

That is, the first moving plate guide block 12b is disposed on one surface of the first moving plate 12 (specifically, one surface of the one-side intermediate plate 126), and the first moving plate guide rail 12c is disposed on the other surface of the first moving plate 12 (specifically, the other surface of the one-side intermediate plate 126).

The first moving plate 12 may be moved by the driving assembly 15.

The driving assembly 15 is connected to the first moving plate 12 and reciprocates the first moving plate 12.

The driving assembly 15 reciprocates the first moving plate 12 in one direction (specifically, the horizontal direction).

Referring to FIG. 6, the driving assembly 15 includes a motor 151, a motor gear 152, a driving pulley 153, a driving belt 154, and a moving plate gear 155.

The motor 151 is a mechanical device that obtains rotational force from electrical energy. A commonly used electric motor may be applied as the motor 151 of the present disclosure.

The motor 151 may be disposed outside the length extension module 100.

Although not illustrated, the motor 151 may receive power from an electrically connected power supply device (for example, a battery).

The motor gear 152 is a rotating gear and is connected to a rotation shaft of the motor 151. When the rotation shaft of the motor 151 rotates by driving of the motor 151, the motor gear 152 also rotates.

The motor gear 152 may be a commonly used gear or a pulley gear.

The motor gear 152 is connected to the moving plate gear 155.

The moving plate gear 155 is a rotating gear and meshes with the other-side plate gear 1291 formed (or disposed) on the other-side plate 129 of the first moving plate 12.

The moving plate gear 155 is a commonly used rotating gear.

When the moving plate gear 155 rotates in the clockwise direction or the counterclockwise direction, the first moving plate 12 reciprocates in the horizontal direction.

According to examples of implementation states of the present disclosure, the moving plate gear 155 may be connected to the driving pulley 153.

The driving pulley 153 is disposed on one side of the moving plate gear 155 and is connected to the moving plate gear 155. When the driving pulley 153 rotates, the moving plate gear 155 also rotates.

The driving pulley 153 is a commonly used pulley.

The driving belt 154 is connected to the driving pulley 153.

The driving belt 154 is a commonly used belt.

The driving belt 154 is connected to the motor gear 152 and the driving pulley 153. The motor gear 152 and the driving pulley 153 are connected by the driving belt 154. In this case, the motor gear 152 may be a type of pulley gear.

When the motor gear 152 rotates by driving of the motor 151, the driving belt 154 connected to the motor gear 152 moves, and the driving pulley 153 connected to the driving belt 154 rotates. Accordingly, the moving plate gear 155 connected to the driving pulley 153 rotates.

When the moving plate gear 155 rotates, the other-side plate gear 1291 meshed with the moving plate gear 155 moves. Accordingly, the first moving plate 12 moves in the horizontal direction.

The first moving plate 12 reciprocates in the horizontal direction by driving of the motor 151. As the first moving plate 12 moves, the length of the length extension module 100 is extended in the horizontal direction and then reduced.

For example, when the motor gear 152 rotates in the clockwise direction by driving of the motor 151, the first moving plate 12 moves in the horizontal direction from an original position. The length of the length extension module 100 is extended by a distance by which the first moving plate 12 moves.

On the other hand, when the motor gear 152 rotates in the counterclockwise direction by driving of the motor 151, the first moving plate 12 moves from the moved position to the original position. The extended length of the length extension module 100 is reduced by a distance by which the first moving plate 12 moves back to the original position.

According to examples of implementation states of the present disclosure, the motor gear 152 may mesh with the other-side plate gear 1291 formed (or disposed) on the other-side plate 129 of the first moving plate 12. In an example of the implementation state, the motor gear 152 may be a type of rotating gear. In an example of the implementation state, since the moving plate gear 155, the driving pulley 153, and the driving belt 154 described above are not required, the manufacturing cost may be reduced.

According to other examples of implementation states of the present disclosure, the moving plate gear 155 may be directly coupled to the rotation shaft of the motor 151 instead of the motor gear 152. In the examples of implementation states, the motor gear 152, the driving pulley 153, and the driving belt 154 described above are not required.

The first moving plate 12 is connected to the second moving plate 13.

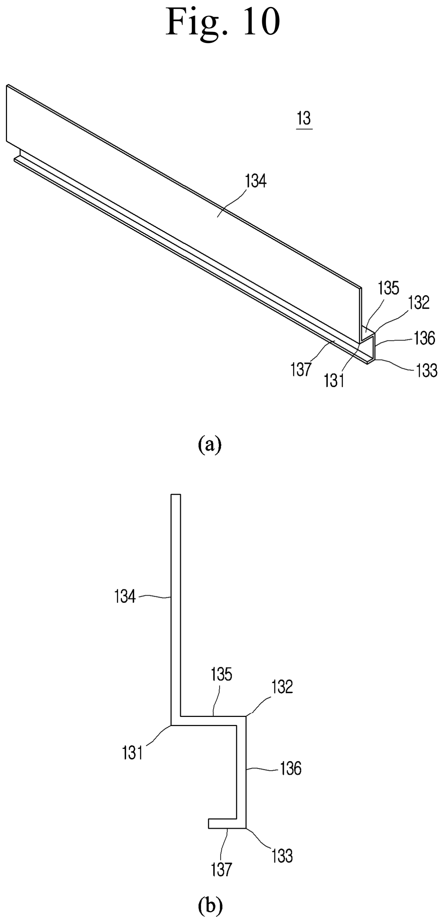

### [Description of second moving plate 13 (see FIG. 10)]

The second moving plate 13 may move in one direction. Here, the one direction may be a horizontal direction.

As the second moving plate 13 moves in the one direction, the length of the length extension module 100 is extended in the one direction.

The second moving plate 13 is formed in a plate shape having a horizontal length, a vertical length, and a thickness.

When a longer side of the second moving plate 13 is disposed in the horizontal direction, the horizontal length of the second moving plate 13 is formed to be longer than the vertical length.

In the present disclosure, the second moving plate 13 is described on an assumption that the longer side of the second moving plate 13 is disposed in the horizontal direction and a shorter side of the second moving plate 13 is disposed in a vertical direction. In addition, a direction indicated by the longer side of the second moving plate 13 is defined as the horizontal direction, a direction indicated by the shorter side of the second moving plate 13 is defined as the vertical direction, and a direction indicated by the thickness of the second moving plate 13 is defined as a thickness direction.

That is, the longer side of the second moving plate 13 is disposed to be parallel to the horizontal direction, and the shorter side of the second moving plate 13 is disposed to be parallel to the vertical direction. In this case, the thickness direction of the second moving plate 13 is a direction orthogonal to the horizontal direction and the vertical direction, respectively.

The second moving plate 13 includes one surface and another surface opposite to the one surface.

The one surface of the second moving plate 13 faces the other surface of the first moving plate 12. That is, the one surface of the second moving plate 13 and the other surface of the first moving plate 12 are disposed to face each other.

The second moving plate 13 is disposed on one side of the first moving plate 12.

The second moving plate 13 is spaced apart from the first moving plate 12 by a predetermined distance.

The second moving plate 13 includes one side in the vertical direction and another side opposite to the one side. The one side of the second moving plate 13 may be disposed to face upward, and the other side of the second moving plate 13 may be disposed to face downward.

According to examples of implementation states, the second moving plate 13 may have a plurality of bent portions.

The plurality of bent portions include a first bent portion 131, a second bent portion 132, and a third bent portion 133. The first bent portion 131, the second bent portion 132, and the third bent portion 133 of the second moving plate 13 described below are distinguished from the first bent portion 121, the second bent portion 122, and the third bent portion 123 of the first moving plate 12 described above.

The first bent portion 131, the second bent portion 132, and the third bent portion 133 of the second moving plate 13 are disposed (or formed) sequentially from the one side to the other side (that is, from top to bottom).

The first bent portion 131 is formed at a position spaced apart from one end of the second moving plate 13 toward the other end by a predetermined distance. The first bent portion 131 is formed entirely from a left end to a right end of the second moving plate 13.

The second bent portion 132 is formed at a position spaced apart from the first bent portion 131 by a predetermined distance in the vertical direction. The second bent portion 132 is formed entirely from the left end to the right end of the second moving plate 13.

The third bent portion 133 is formed at a position spaced apart from the second bent portion 132 by a predetermined distance in the vertical direction. The third bent portion 133 is formed entirely from the left end to the right end of the second moving plate 13.

In addition, the third bent portion 133 is formed at a position spaced apart from the other end of the second moving plate 13 toward the one end by a predetermined distance.

In the second moving plate 13, a portion from the one end of the second moving plate 13 to the first bent portion 131 may be referred to as a one-side plate 134, a portion from the first bent portion 131 to the second bent portion 132 (that is, between the first bent portion 131 and the second bent portion 132) may be referred to as an intermediate plate 135, a portion from the second bent portion 132 to the third bent portion 133 (that is, between the second bent portion 132 and the third bent portion 133) may be referred to as an other-side intermediate plate 136, and a portion from the third bent portion 133 to the other end (that is, between the third bent portion 133 and the other end) may be referred to as an other-side plate 137.

The one-side plate 134 is disposed in the vertical direction.

Due to the first bent portion 131, the intermediate plate 135 faces the first moving plate 12. For example, the first bent portion 131 is bent in the clockwise direction.

Due to the second bent portion 132, the other-side intermediate plate 136 is disposed in the vertical direction (specifically, facing downward). For example, the second bent portion 132 is bent in the counterclockwise direction.

Due to the third bent portion 133, the other-side plate 137 faces a direction opposite to a direction facing the first moving plate 12 (that is, a direction opposite to a direction faced by the intermediate plate 135). For example, the third bent portion 133 is bent in the counterclockwise direction.

Due to the second bent portion 132 and the third bent portion 133, the intermediate plate 135 and the other-side plate 137 of the second moving plate 13 face directions opposite to each other.

The length extension module 100 of the present disclosure includes the second moving plate belt connection member 13a and the second moving plate guide block 13b disposed on the second moving plate 13.

The second moving plate belt connection member 13a is disposed and fixed on one surface of the second moving plate 13. Specifically, the second moving plate belt connection member 13a is disposed and fixed on the one-side plate 134 of the one surface of the second moving plate 13. The second moving plate belt connection member 13a may be fixed to the one surface of the second moving plate 13 by a fastening member such as a screw.

The second moving plate belt connection member 13a is connected to the first moving plate belt 12a1 disposed on the first moving plate 12 described above. The second moving plate belt connection member 13a and the first moving plate belt 12a1 are fixed to each other.

The second moving plate belt connection member 13a is not limited to a specific shape, and may be formed in various shapes as long as one portion of the second moving plate belt connection member 13a is fixed to the second moving plate 13 and another portion is fixed to the first moving plate belt 12a1.

The second moving plate guide block 13b is movably coupled to the first moving plate guide rail 12c disposed (or mounted) on the first moving plate 12.

When the second moving plate 13 reciprocates in the horizontal direction, the second moving plate guide block 13b may reciprocate in the length direction of the first moving plate guide rail 12c while being coupled to the first moving plate guide rail 12c disposed on the first moving plate 12. The first moving plate guide rail 12c performs a role of guiding movement of the second moving plate 13.

The second moving plate guide block 13b is not limited to a specific shape. Any shape may be applied to the second moving plate guide block 13b as long as the second moving plate guide block 13b is capable of reciprocating in the length direction of the first moving plate guide rail 12c while being coupled to the first moving plate guide rail 12c.

The second moving plate guide block 13b is disposed and fixed on one surface of the second moving plate 13. Specifically, the second moving plate guide block 13b is disposed and fixed on the one-side plate 134 of the one surface of the second moving plate 13. The second moving plate guide block 13b may be fixed by a fastening member such as a screw.

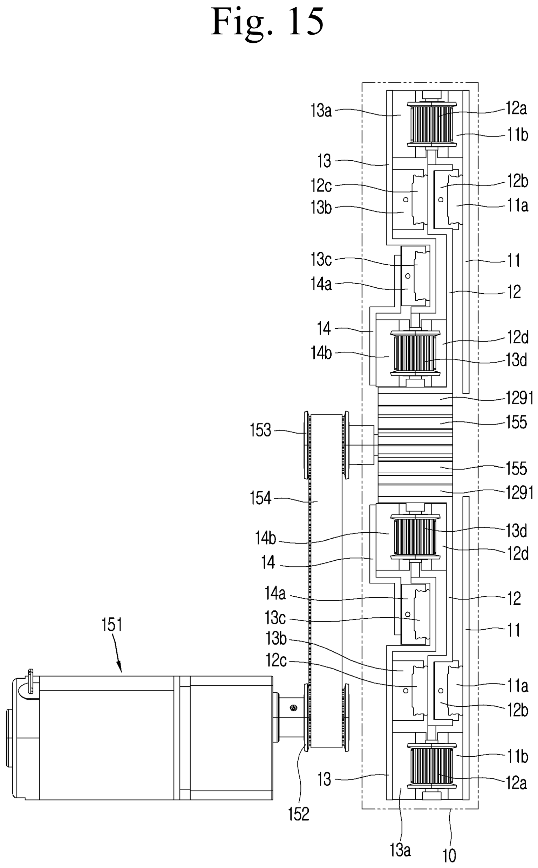

The second moving plate belt connection member 13a and the second moving plate guide block 13b are disposed on one surface of the second moving plate 13 with a predetermined spacing therebetween (see FIG. 15). Specifically, on the one surface of the second moving plate 13, the second moving plate belt connection member 13a may be disposed above the second moving plate guide block 13b. Accordingly, the first moving plate belt assembly 12a connected to the second moving plate belt connection member 13a and the second moving plate 13 connected to the first moving plate guide rail 12c are prevented from interfering with or contacting each other.

When the first moving plate 12 reciprocates in the horizontal direction by driving of the motor 151, the second moving plate 13 connected to the first moving plate 12 also reciprocates in the horizontal direction.

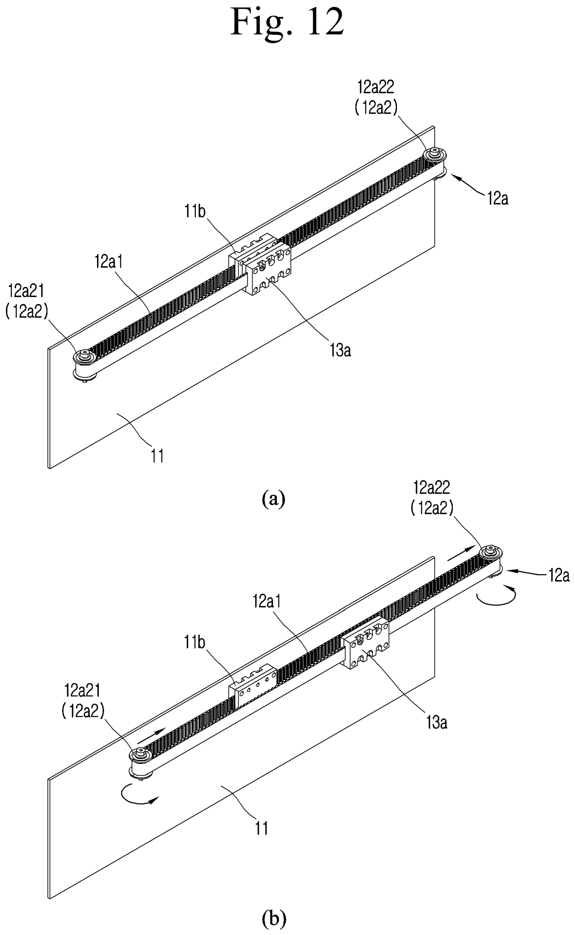

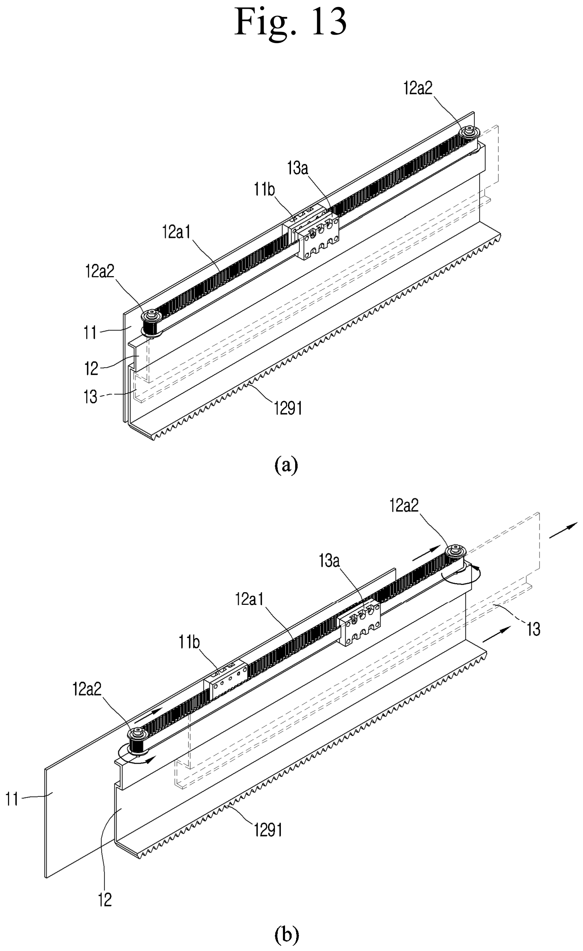

Referring to FIGS. 12 and 13, details are provided.

When the first moving plate 12 moves in one direction (the horizontal direction) by driving of the motor 151, the first moving plate belt assembly 12a disposed on the first moving plate 12 also moves.

In this case, since one side of the first moving plate belt 12a1 is fixed to the fixing plate belt connection member 11b disposed on the fixing plate 11, the first moving plate pulley 12a2 (specifically, the pulley body) rotates and moves together with the first moving plate 12 along the first moving plate belt 12a1 in the one direction (the horizontal direction).

Accordingly, the second moving plate belt connection member 13a fixed to the other side of the first moving plate belt 12a1 also moves together with the first moving plate pulley 12a2. That is, the second moving plate belt connection member 13a moves in the one direction (the horizontal direction) by a distance corresponding to a distance by which the first moving plate pulley 12a2 moves along the first moving plate belt 12a1.

Since the second moving plate belt connection member 13a is fixed to the second moving plate 13, movement of the second moving plate belt connection member 13a indicates movement of the second moving plate 13.

As described above, when the motor 151 is driven, the first moving plate 12 moves, and the second moving plate 13 connected to the first moving plate 12 moves. In this cases, a moving distance of the second moving plate 13 becomes twice a moving distance of the first moving plate 12.

First, when the first moving plate 12 moves by driving of the motor 151, the second moving plate 13 moves together with the first moving plate 12. The second moving plate 13 moves by the moving distance of the first moving plate 12.

When the first moving plate 12 moves, the first moving plate pulley 12a2 (specifically, the pulley body) rotates and moves together with the first moving plate 12 along the first moving plate belt 12a1. In this case, the second moving plate belt connection member 13a fixed to the first moving plate belt 12a1 moves by a distance by which the first moving plate pulley 12a2 moves along the first moving plate belt 12a1. Here, a moving distance of the first moving plate pulley 12a2 is equal to the moving distance of the first moving plate 12 moved by driving of the motor 151.

As a result, the second moving plate belt connection member 13a (that is, the second moving plate 13) moves together with the first moving plate 12 and simultaneously moves by the distance by which the first moving plate pulley 12a2 moves along the first moving plate belt 12a1.

Accordingly, the moving distance of the second moving plate belt connection member 13a (that is, the second moving plate 13) becomes twice the moving distance of the first moving plate 12.

The first moving plate 12 and the second moving plate 13 reciprocate in the horizontal direction by driving of the motor 151. As the first moving plate 12 and the second moving plate 13 move, the length of the length extension module 100 is extended in the horizontal direction and then reduced.

For example, when the motor gear 152 rotates in the clockwise direction by driving of the motor 151, the first moving plate 12 and the second moving plate 13 move in the horizontal direction from an original position. The length of the length extension module 100 is extended by a distance by which the first moving plate 12 and the second moving plate 13 move.

On the other hand, when the motor gear 152 rotates in the counterclockwise direction by driving of the motor 151, the first moving plate 12 and the second moving plate 13 move from the moved position to the original position. The extended length of the length extension module 100 is reduced by a distance by which the first moving plate 12 and the second moving plate 13 move back to the original position.

As described above, the length extension module 100 of the present disclosure extends the length of the module 100 by adding the second moving plate 13 to the first moving plate 12.

When a third moving plate 14 is added to the second moving plate 13, the length extension module 100 of the present disclosure may further extend the length of the module 100.

As more moving plates are added, the length extension module 100 of the present disclosure is capable of further extending the length of the module 100.

Hereinafter, extension of the length of the length extension module 100 of the present disclosure by adding the third moving plate 14 to the second moving plate 13 will be described. The extension of the length of the length extension module 100 of the present disclosure by adding a fourth moving plate to the third moving plate 14 may be achieved by repeating the above-described method, and thus a description thereof will be omitted.

The length extension module 100 according to examples of implementation states of the present disclosure further includes the third moving plate 14. The third moving plate 14 is connected to the second moving plate 13.

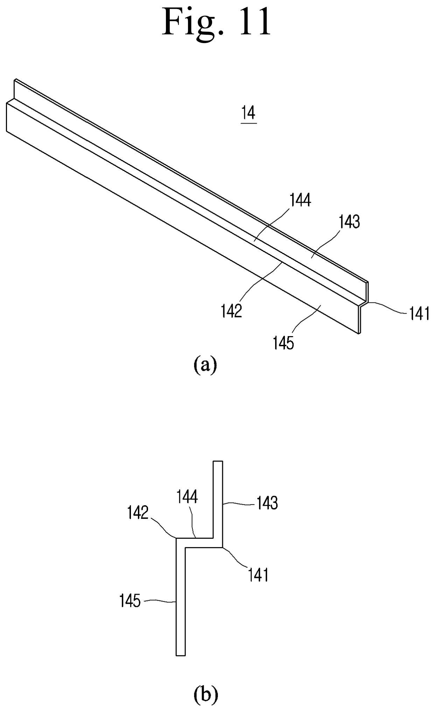

### [Description of third moving plate 14 (see FIG. 11)]

The third moving plate 14 may move in one direction. Here, the one direction may be a horizontal direction.

As the third moving plate 14 moves in the one direction, the length of the length extension module 100 is extended in the one direction.

The third moving plate 14 is formed in a plate shape having a horizontal length, a vertical length, and a thickness.

When a longer side of the third moving plate 14 is disposed in the horizontal direction, the horizontal length of the third moving plate 14 is formed to be longer than the vertical length.

In the present disclosure, the third moving plate 14 is described on an assumption that the longer side of the third moving plate 14 is disposed in the horizontal direction and a shorter side of the third moving plate 14 is disposed in a vertical direction. In addition, a direction indicated by the longer side of the third moving plate 14 is defined as the horizontal direction, a direction indicated by the shorter side of the third moving plate 14 is defined as the vertical direction, and a direction indicated by a thickness of the third moving plate 14 is defined as a thickness direction.

That is, the longer side of the third moving plate 14 is disposed to be parallel to the horizontal direction, and the shorter side of the third moving plate 14 is disposed to be parallel to the vertical direction. In this case, the thickness direction of the third moving plate 14 is a direction orthogonal to the horizontal direction and the vertical direction, respectively.

The third moving plate 14 includes one surface and another surface opposite to the one surface.

The one surface of the third moving plate 14 faces the other surface of the second moving plate 13. That is, the one surface of the third moving plate 14 and the other surface of the second moving plate 13 are disposed to face each other.

The third moving plate 14 is disposed on one side of the second moving plate 13.

The third moving plate 14 is spaced apart from the second moving plate 13 by a predetermined distance.

The third moving plate 14 includes one side in the vertical direction and another side opposite to the one side. The one side of the third moving plate 14 may be disposed to face upward, and the other side of the third moving plate 14 may be disposed to face downward.

According to examples of implementation states, the third moving plate 14 may have a plurality of bent portions.

The plurality of bent portions include a first bent portion 141 and a second bent portion 142. The first bent portion 141 and the second bent portion 142 of the third moving plate 14 described below are distinguished from the first bent portion 121 and 131 and the second bent portion 122 and 132 of the first moving plate 12 and the second moving plate 13 described above.

In the third moving plate 14, the first bent portion 141 and the second bent portion 142 are disposed (or formed) sequentially from the one side to the other side (that is, from top to bottom).

The first bent portion 141 is formed at a position spaced apart from one end of the third moving plate 14 toward the other end by a predetermined distance. The first bent portion 141 is formed entirely from a left end to a right end of the third moving plate 14.

The second bent portion 142 is formed at a position spaced apart from the first bent portion 141 by a predetermined distance in the vertical direction. The second bent portion 142 is formed entirely from the left end to the right end of the third moving plate 14.

In addition, the second bent portion 142 is formed at a position spaced apart from the other end of the third moving plate 14 toward the one end by a predetermined distance.

In the third moving plate 14, a portion from the one end of the third moving plate 14 to the first bent portion 141 may be referred to as a one-side plate 143, a portion from the first bent portion 141 to the second bent portion 142 (that is, between the first bent portion 141 and the second bent portion 142) may be referred to as an intermediate plate 144, and a portion from the second bent portion 142 to the other end (that is, between the second bent portion 142 and the other end) may be referred to as an other-side plate 145.

The one-side plate 143 is disposed in the vertical direction.

Due to the first bent portion 141, the intermediate plate 144 faces a direction opposite to a direction facing the second moving plate 13. For example, the first bent portion 141 is bent in the counterclockwise direction.

Due to the second bent portion 142, the other-side plate 145 is disposed in the vertical direction (specifically, facing downward). For example, the second bent portion 142 is bent in the clockwise direction.

To move the third moving plate 14 in one direction, the first moving plate 12 of the present disclosure further includes a first moving plate belt connection member 12d, and the second moving plate 13 of the present disclosure further includes a second moving plate guide rail 13c and a second moving plate belt assembly 13d. The components will be described.

The first moving plate 12 of the present disclosure further includes a first moving plate belt connection member 12d.

The first moving plate belt connection member 12d is disposed and fixed on the other surface of the first moving plate 12. Specifically, the first moving plate belt connection member 12d is disposed and fixed on the other-side intermediate plate 128 of the other surface of the first moving plate 12. The first moving plate belt connection member 12d may be fixed to the other surface of the first moving plate 12 by a fastening member such as a screw.

The first moving plate belt connection member 12d is connected to a second moving plate belt 13d1 disposed on the second moving plate 13 described below. The first moving plate belt connection member 12d and the second moving plate belt 13d1 are fixed to each other.

The first moving plate belt connection member 12d is not limited to a specific shape, and may be formed in various shapes as long as one portion of the first moving plate belt connection member 12d is fixed to the first moving plate 12 and another portion is fixed to the second moving plate belt 13d1.

In addition, the second moving plate 13 of the present disclosure further includes the second moving plate guide rail 13c and the second moving plate belt assembly 13d.

The second moving plate guide rail 13c is formed in a rod shape having a predetermined length in one direction.

The second moving plate guide rail 13c is disposed and fixed in the horizontal direction on the other surface of the second moving plate 13. Specifically, the second moving plate guide rail 13c is disposed and fixed on the other-side intermediate plate 136 of the other surface of the second moving plate 13. The second moving plate guide rail 13c may be fixed by a fastening member such as a screw.

A third moving plate guide block 14a disposed on the third moving plate 14 described below is movably disposed on the second moving plate guide rail 13c. The third moving plate guide block 14a may reciprocate in a length direction of the second moving plate guide rail 13c while being coupled to the second moving plate guide rail 13c.

The second moving plate belt assembly 13d is disposed on the other-side plate 137 of the second moving plate 13. Specifically, the second moving plate belt assembly 13d is disposed on the other-side plate 137 of the one surface of the second moving plate 13.

The second moving plate belt assembly 13d connects the first moving plate 12 and the third moving plate 14 as described below.

The second moving plate belt assembly 13d includes the second moving plate belt 13d1 and a second moving plate pulley 13d2.

The second moving plate belt 13d1 is connected to the second moving plate pulley 13d2. A known belt may be applied as the second moving plate belt 13d1 of the present disclosure.

Grooves at equal intervals, similar to those of a gear, may be formed in the second moving plate belt 13d1.

The second moving plate pulley 13d2 includes a pulley rotation shaft (reference numeral not assigned) and a pulley body (reference numeral not assigned). A known pulley may be applied as the second moving plate pulley 13d2 of the present disclosure.

The pulley rotation shaft is disposed at a central portion of the pulley body.

The pulley body is rotatably coupled to the pulley rotation shaft. That is, while being coupled to the pulley rotation shaft, the pulley body may rotate about the pulley rotation shaft as a rotation axis.

Grooves at the same intervals as the grooves formed in the second moving plate belt 13d1 may be formed on an outer circumferential surface of the pulley body such that the grooves mesh with the grooves formed in the second moving plate belt 13d1.

Two second moving plate pulleys 13d2 are provided.

The second moving plate belt 13d1 is coupled to the two second moving plate pulleys 13d2. Accordingly, the two second moving plate pulleys 13d2 are connected by the second moving plate belt 13d1.

Specifically, the second moving plate belt 13d1 is coupled to pulley bodies of the two second moving plate pulleys 13d2, respectively, thereby connecting the two second moving plate pulleys 13d2.

The two second moving plate pulleys 13d2 are disposed on the other-side plate 137 of the second moving plate 13 with a predetermined distance therebetween.

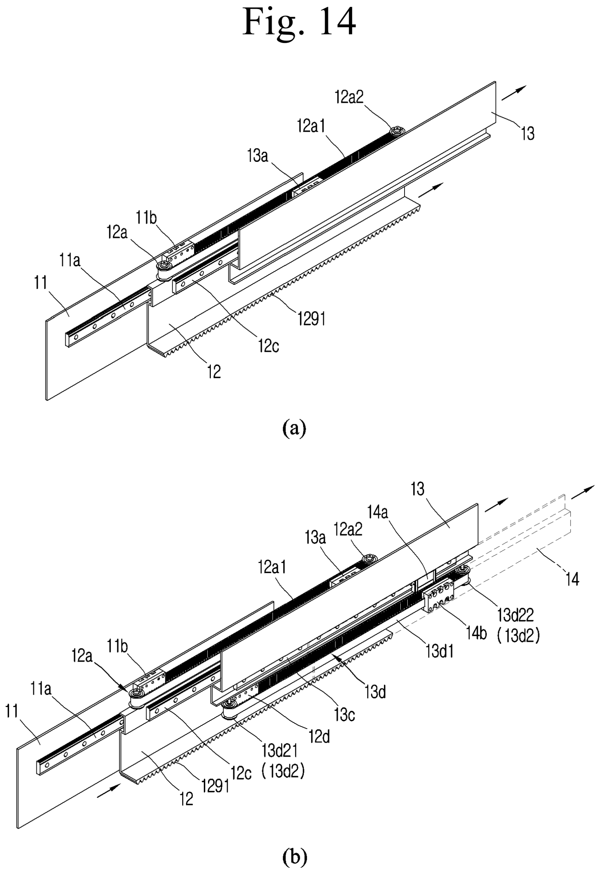

One second moving plate pulley 13d21 (see FIG. 14) of the two second moving plate pulleys 13d2 is disposed on a left end side of the other-side plate 137 of the second moving plate 13. Here, the left end side refers to a left end or a location adjacent to the left end. One end of a pulley rotation shaft of the one second moving plate pulley 13d21 is fixed to the other-side plate 137 of the second moving plate 13, and a pulley body of the one second moving plate pulley 13d21 may rotate while being coupled to the pulley rotation shaft and the second moving plate belt 13d1.

The other second moving plate pulley 13d22 of the two second moving plate pulleys 13d2 is disposed on a right end side of the other-side plate 137 of the second moving plate 13. Here, the right end side refers to a right end or a location adjacent to the right end. One end of a pulley rotation shaft of the other second moving plate pulley 13d22 is fixed to the other-side plate 137 of the second moving plate 13, and a pulley body of the other second moving plate pulley 13d22 may rotate while being coupled to the pulley rotation shaft and the second moving plate belt 13d1.

One side of the second moving plate belt 13d1 is fixed to the first moving plate belt connection member 12d disposed on the first moving plate 12. The other side of the second moving plate belt 13d1 is fixed to a third moving plate belt connection member 14b disposed on a third moving plate 14 described below.

The length extension module 100 of the present disclosure includes the third moving plate guide block 14a and the third moving plate belt connection member 14b disposed on the third moving plate 14.

The third moving plate guide block 14a is movably coupled to the second moving plate guide rail 13c disposed (or mounted) on the second moving plate 13.

When the third moving plate 14 reciprocates in the horizontal direction, the third moving plate guide block 14a may reciprocate in the length direction of the second moving plate guide rail 13c while being coupled to the second moving plate guide rail 13c disposed on the second moving plate 13. The second moving plate guide rail 13c performs a role of guiding movement of the third moving plate 14.

The third moving plate guide block 14a is not limited to a specific shape. Any shape may be applied to the third moving plate guide block 14a as long as the third moving plate guide block 14a is capable of reciprocating in the length direction of the second moving plate guide rail 13c while being coupled to the second moving plate guide rail 13c.

The third moving plate guide block 14a is disposed and fixed on one surface of the third moving plate 14. Specifically, the third moving plate guide block 14a is disposed and fixed on the one-side plate 143 of the one surface of the third moving plate 14. The third moving plate guide block 14a may be fixed by a fastening member such as a screw.

The third moving plate belt connection member 14b is disposed and fixed on one surface of the third moving plate 14. Specifically, the third moving plate belt connection member 14b is disposed and fixed on the other-side plate 145 of the one surface of the third moving plate 14. The third moving plate belt connection member 14b may be fixed to the one surface of the third moving plate 14 by a fastening member such as a screw.

The third moving plate belt connection member 14b is connected to the second moving plate belt 13d1 disposed on the second moving plate 13 described above. The third moving plate belt connection member 14b and the second moving plate belt 13d1 are fixed to each other.

The third moving plate belt connection member 14b is not limited to a specific shape, and may be formed in various shapes as long as one portion of the third moving plate belt connection member 14b is fixed to the third moving plate 14 and another portion is fixed to the second moving plate belt 13d1.

Since the third moving plate guide block 14a is disposed on the one-side plate 143 of the one surface of the third moving plate 14 and the third moving plate belt connection member 14b is disposed on the other-side plate 145 of the one surface of the third moving plate 14, the second moving plate belt assembly 13d connected to the third moving plate belt connection member 14b and the third moving plate 14 connected to the second moving plate guide rail 13c by the third moving plate guide block 14a are prevented from interfering with or contacting each other.

When the first moving plate 12 reciprocates in the horizontal direction by driving of the motor 151, the second moving plate 13 connected to the first moving plate 12 and the third moving plate 14 connected to the second moving plate 13 also reciprocate in the horizontal direction.

Referring to FIG. 14, details are provided.

When the first moving plate 12 moves in one direction (the horizontal direction) by driving of the motor 151, the first moving plate belt assembly 12a disposed on the first moving plate 12 and the second moving plate belt assembly 13d disposed on the second moving plate 13 also move.

In this case, since one side of the first moving plate belt 12a1 is fixed to the fixing plate belt connection member 11b disposed on the fixing plate 11, the first moving plate pulley 12a2 (specifically, the pulley body) rotates and moves together with the first moving plate 12 along the first moving plate belt 12a1 in the one direction (the horizontal direction).

Accordingly, the second moving plate belt connection member 13a fixed to the other side of the first moving plate belt 12a1 also moves together with the first moving plate pulley 12a2. The second moving plate belt connection member 13a moves in the one direction (the horizontal direction) by a distance corresponding to a distance by which the first moving plate pulley 12a2 moves along the first moving plate belt 12a1.

Since the second moving plate belt connection member 13a is fixed to the second moving plate 13, movement of the second moving plate belt connection member 13a indicates movement of the second moving plate 13.

In addition, since one side of the second moving plate belt 13d1 is fixed to the first moving plate belt connection member 12d disposed on the first moving plate 12, the second moving plate pulley 13d2 (specifically, the pulley body) rotates and moves together with the second moving plate 13 along the second moving plate belt 13d1 in one direction (the horizontal direction).

Accordingly, the third moving plate belt connection member 14b fixed to the other side of the second moving plate belt 13d1 also moves together with the second moving plate pulley 13d2. The third moving plate belt connection member 14b moves in the one direction (the horizontal direction) by a distance corresponding to a distance by which the second moving plate pulley 13d2 moves along the second moving plate belt 13d1.

Since the third moving plate belt connection member 14b is fixed to the third moving plate 14, movement of the third moving plate belt connection member 14b indicates movement of the third moving plate 14.

As described above, when the motor 151 is driven, the first moving plate 12 moves, the second moving plate 13 connected to the first moving plate 12 moves, and the third moving plate 14 connected to the second moving plate 13 moves. In this case, a moving distance of the third moving plate 14 becomes three times a moving distance of the first moving plate 12.

First, when the first moving plate 12 moves by driving of the motor 151, the second moving plate 13 and the third moving plate 14 move together with the first moving plate 12. The second moving plate 13 and the third moving plate 14 move by the moving distance of the first moving plate 12.

When the first moving plate 12 moves, the first moving plate pulley 12a2 (specifically, the pulley body) rotates and moves together with the first moving plate 12 along the first moving plate belt 12a1. In this case, the second moving plate belt connection member 13a fixed to the first moving plate belt 12a1 moves by a distance by which the first moving plate pulley 12a2 moves along the first moving plate belt 12a1. Here, a moving distance of the first moving plate pulley 12a2 is equal to the moving distance of the first moving plate 12 moved by driving of the motor 151.

The second moving plate belt connection member 13a (that is, the second moving plate 13) moves together with the first moving plate 12 and simultaneously moves by the distance by which the first moving plate pulley 12a2 moves along the first moving plate belt 12a1.

Accordingly, a moving distance of the second moving plate belt connection member 13a (that is, the second moving plate 13) becomes twice the moving distance of the first moving plate 12.

When the second moving plate 13 moves, the third moving plate 14 moves together with the second moving plate 13. The third moving plate 14 moves by the moving distance of the second moving plate 13. Accordingly, the moving distance of the third moving plate 14 also becomes twice the moving distance of the first moving plate 12.

When the second moving plate 13 moves, the second moving plate pulley 13d2 (specifically, the pulley body) rotates and moves together with the second moving plate 13 along the second moving plate belt 13d1. In this case, the third moving plate belt connection member 14b fixed to the second moving plate belt 13d1 moves by a distance by which the second moving plate pulley 13d2 moves along the second moving plate belt 13d1. Here, a moving distance of the second moving plate pulley 13d2 is equal to the moving distance of the first moving plate 12 moved by driving of the motor 151.

The third moving plate belt connection member 14b (that is, the third moving plate 14) moves together with the second moving plate 13 and simultaneously moves by the distance by which the second moving plate pulley 13d2 moves along the second moving plate belt 13d1.

Accordingly, a moving distance of the third moving plate belt connection member 14b (that is, the third moving plate 14) becomes three times a moving distance of the first moving plate 12.

The first moving plate 12, the second moving plate 13, and the third moving plate 14 reciprocate in the horizontal direction by driving of the motor 151. As the first moving plate 12, the second moving plate 13, and the third moving plate 14 move, the length of the length extension module 100 is extended in the horizontal direction and then reduced.

For example, when the motor gear 152 rotates in the clockwise direction by driving of the motor 151, the first moving plate 12 to the third moving plate 14 move in the horizontal direction from an original position. The length of the length extension module 100 is extended by a distance by which the first moving plate 12 to the third moving plate 14 move.

On the other hand, when the motor gear 152 rotates in the counterclockwise direction by driving of the motor 151, the first moving plate 12 to the third moving plate 14 move from the moved position to the original position. The extended length of the length extension module 100 is reduced by a distance by which the first moving plate 12 to the third moving plate 14 move back to the original position.

Referring to FIG. 6, FIG. 15, and FIG. 16, a plurality of length extension modules 100 according to examples of implementation states of the present disclosure may be provided.

The plurality of length extension modules 100 include a first length extension module 100 and a second length extension module 100.

Since the first length extension module 100 and the second length extension module 100 are identical length extension modules 100, the first length extension module 100 and the second length extension module 100 have identical components and operate in an identical manner.

An arrangement relationship between the first length extension module 100 and the second length extension module 100 is as follows.

The first length extension module 100 and the second length extension module 100 are disposed in the vertical direction. The first length extension module 100 is disposed above, and the second length extension module 100 is disposed below.

The second length extension module 100 is disposed in an inverted manner relative to the first length extension module 100. Specifically, the other-side plate gear 1291 formed on the first moving plate 12 of the first length extension module 100 and the other-side plate gear 1291 formed on the first moving plate 12 of the second length extension module 100 are disposed to face each other.

The moving plate gear 155 of the driving assembly 15 is disposed between the first length extension module 100 and the second length extension module 100. That is, the first length extension module 100 and the second length extension module 100 are disposed in the vertical direction with the moving plate gear 155 of the driving assembly 15 interposed therebetween.

The moving plate gear 155 meshes with the other-side plate gear 1291 formed on the first moving plate 12 of the first length extension module 100 and the other-side plate gear 1291 formed on the first moving plate 12 of the second length extension module 100.

Accordingly, when the moving plate gear 155 of the driving assembly 15 rotates, the first moving plate 12 of the first length extension module 100 moves in one direction (for example, a rightward direction). Accordingly, when the moving plate gear 155 of the driving assembly 15 rotates, the first moving plate 12 of the first length extension module 100 moves in one direction (for example, the rightward direction), and the first moving plate 12 of the second length extension module 100 moves in a direction opposite to the one direction (for example, a leftward direction). As each first moving plate 12 moves, the corresponding second moving plate 13 and/or the corresponding third moving plate 14 also move.

As described above, when the plurality of length extension modules 100 are used, the length of the length extension modules 100 may be extended in both horizontal directions (that is, leftward and rightward directions) using a single driving assembly 15.

The above-described length extension module 100 according to examples of implementation states of the present disclosure may be applied to a sensor device.

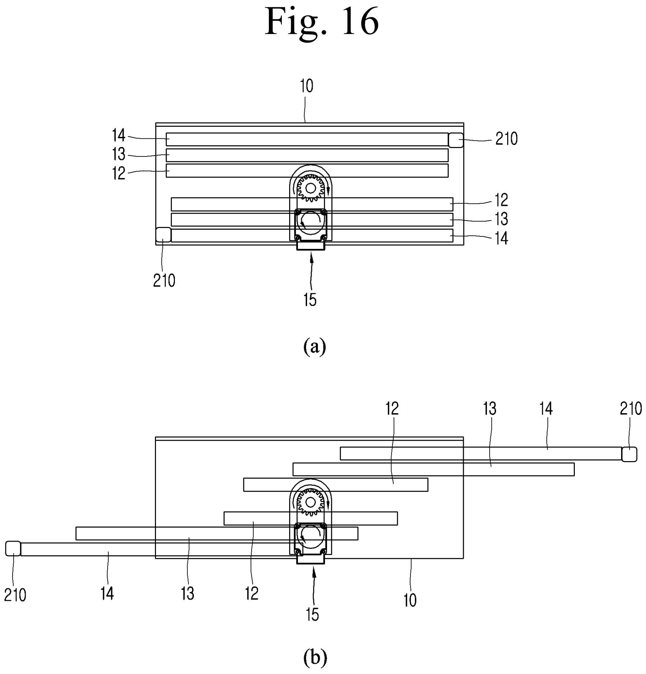

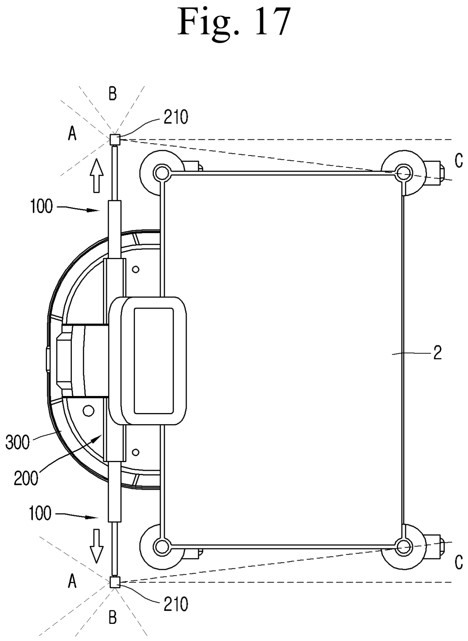

Referring to FIGS. 16 and 17, a sensor device 200 according to examples of implementation states of the present disclosure includes the above-described length extension module 100 of the present disclosure and an obstacle sensor 210. In FIG. 17, reference numeral 300 denotes a robot, and reference numeral 2 denotes a rolltainer.

The sensor device 200 of the present disclosure may include a housing 250 forming an exterior appearance of the sensor device 200. According to examples of implementation states, the housing 250 of the sensor device 200 may be the housing 10 included in the length extension module 100 of the present disclosure.

The obstacle sensor 210 is coupled to an end portion of a moving plate of the length extension module 100 of the present disclosure.

For example, in examples of implementation states in which the length extension module 100 of the present disclosure includes the fixing plate 11, the first moving plate 12, and the second moving plate 13, the obstacle sensor 210 is coupled to one end portion of the second moving plate 13. Here, the one end portion of the second moving plate 13 refers to an end portion facing outward when the second moving plate 13 is extended in the horizontal direction.

For example, in examples of implementation states in which the length extension module 100 of the present disclosure includes the fixing plate 11, the first moving plate 12, the second moving plate 13, and the third moving plate 14, the obstacle sensor 210 is coupled to one end portion of the third moving plate 14. Here, the one end portion of the third moving plate 14 refers to an end portion facing outward when the third moving plate 14 is extended in the horizontal direction.

When the obstacle sensor 210 is coupled to the length extension module 100 of the present disclosure, the obstacle sensor 210 is capable of sensing an additional area corresponding to an extended length of the length extension module 100. That is, the sensor device 200 of the present disclosure is capable of sensing a wider area than a conventional sensor device 200.

The obstacle sensor 210 may be an obstacle detection sensor configured to detect an obstacle.

The obstacle detection sensor may include at least one of a lidar, a camera, an ultrasonic sensor, and the like.

Alternatively, the obstacle sensor 210 may be a distance sensor configured to measure a distance.

The distance sensor may include at least one of an ultrasonic sensor (USS), a time-of-flight (ToF) sensor, a three-dimensional camera (3D CAM), a vision sensor, and the like.

The obstacle sensor 210 may include a front sensor (not illustrated) configured to sense a front side, a rear sensor (not illustrated) configured to sense a rear side, and a side sensor (not illustrated) configured to sense a lateral side. In FIG. 17, reference symbol A denotes a sensing area sensed by the front sensor, reference symbol B denotes a sensing area sensed by the side sensor, and reference symbol C denotes a sensing area sensed by the rear sensor.

The above-described sensor device 200 according to examples of implementation states of the present disclosure may be applied to a moving object. The moving object refers to any object capable of movement.

Specifically, the moving object may be a robot. The term "robot" includes all robots commonly referred to as a robot, and the sensor device 200 of the present disclosure may be mounted on the robot.

When the sensor device 200 of the present disclosure is mounted on a robot 300 transporting a rolltainer (see FIGS. 5 and 17), the sensor device 200 of the present disclosure is capable of sensing a front side, a lateral side, and a rear side of the robot 300 and/or a rolltainer 2, and is capable of preventing collision of the robot 300 and/or the rolltainer 2 with an obstacle or the like.

The robot 300 according to examples of implementation states of the present disclosure includes the above-described sensor device 200 of the present disclosure.

The robot 300 of the present disclosure may be, for example, a robot configured to transport the rolltainer 2.

The robot 300 of the present disclosure includes a robot body (reference numeral not assigned) forming a body of the robot 300, a controller (not illustrated) accommodated in the robot body, and the sensor device 200 disposed on the robot body and electrically connected to the controller. The sensor device 200 refers to the above-described sensor device 200 of the present disclosure.

The robot body corresponds to the body of the robot 300.

The robot body includes an internal space, and the internal space accommodates various electrical, electronic, and mechanical devices. Here, the electrical, electronic, and mechanical devices include various devices such as electronic control devices required for mission execution of the robot 300, various sensors, and a power supply device (for example, a battery).

Wheels are disposed on a lower side of the robot body. The robot is capable of moving by driving of the wheels.

The controller includes electrical and electronic components and driving programs.

The controller is capable of controlling the motor 151 included in the length extension module 100 of the present disclosure and/or the obstacle sensor 210 included in the sensor device 200.

The controller is electrically connected to the motor 151 and the obstacle sensor 210.

The controller is capable of driving the motor 151 by supplying power to the motor 151 or stopping driving of the motor 151 by cutting off power supplied to the motor 151. The power may be supplied from a battery.

According to examples of implementation states, the controller may be disposed in the sensor device 200.

The controller is capable of receiving a signal output from the obstacle sensor 210 and determining whether an obstacle is present around the robot 300.

The robot 300 of the present disclosure recognizes that the rolltainer 2 is coupled to the robot body when the rolltainer 2 is coupled to the robot body.

For example, the robot body and the rolltainer 2 may each include a coupling portion. The coupling portion (reference numeral not assigned) included in the robot body may be a button-type sensor. When the coupling portion (reference numeral not assigned) included in the rolltainer presses the button-type sensor included in the robot body, the button-type sensor generates an electrical signal and transmits the electrical signal to the controller. When the controller receives the electrical signal from the button-type sensor, the controller determines (or recognizes) that the rolltainer 2 is coupled to the robot body.

When the robot 300 (specifically, the controller) determines that the rolltainer 2 is coupled to the robot body, the controller supplies power to the motor 151 of the length extension module 100 of the present disclosure to drive the motor 151. By driving of the motor 151, a length of the length extension module 100 is extended.

The robot 300 (specifically, the controller) determines (or recognizes) whether the obstacle is present around the robot 300 and/or the rolltainer 2 based on the obstacle sensor 210 mounted on one end portion of the second moving plate 13 or the third moving plate 14 included in the length extension module 100.

When the robot 300 (specifically, the controller) determines that the obstacle is present around the robot 300 and/or the rolltainer 2, the robot 300 moves by bypassing the obstacle.

Accordingly, the robot 300 is capable of preventing collision with the obstacle present around the robot 300 and/or the rolltainer 2 during travel.

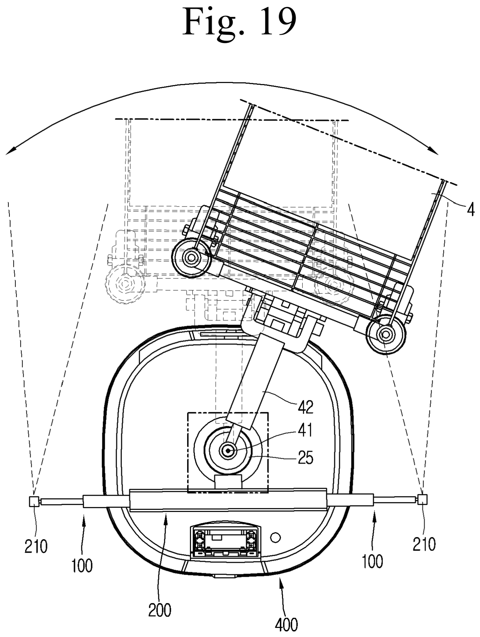

Referring to FIGS. 17 to 19, a rolltainer needs to be coupled to a robot body in order for a robot to transport the rolltainer. In FIG. 18, reference numeral 3 denotes a robot. In FIG. 19, reference numeral 400 denotes a robot. In FIGS. 18 and 19, reference numeral 4 denotes a rolltainer.

Coupling methods by which a rolltainer is coupled to a robot body include a fixed type and a towing type.

When the rolltainer 2 is coupled to the robot body in the fixed type, the rolltainer 2 is fixed to the robot body, and the robot 300 and the rolltainer 2 travel integrally (as if the robot 300 and the rolltainer 2 form a single body). The robot 300 illustrated in FIGS. 5 and 17 is coupled to the rolltainer 2 in the fixed type.

When the rolltainer 4 is coupled to the robot body in the towing type, the rolltainer 4 is capable of rotating while being coupled to the robot body. That is, the rolltainer 4 is rotatably coupled to the robot body. The robots 3 and 400 illustrated in FIGS. 18 to 20 and FIG. 22 are coupled to the rolltainer 4 in the towing type.

The robot 3 or 400 in which the rolltainer 4 is coupled to the robot body in the towing type may be referred to as a towing-type robot.

The robot 3 or 400 transporting the rolltainer 4 performs not only straight-line travel but also curved travel.

Referring to FIG. 19, when the sensor device 200 is fixed to the robot body and the sensor device 200 and the robot body move integrally, the towing-type robot 400 (specifically, the controller) may determine (or recognize) that, during curved travel, the rolltainer 4 towed by the robot 400 is an obstacle. This is because the rolltainer 4 is located in a sensing area of a rear sensor included in the sensor device 200.

In addition, even when the rolltainer 4 rotates around the towing-type robot 3 or 400 while the towing-type robot 3 or 400 is stopped, the towing-type robot 3 or 400 (specifically, the controller) may determine (or recognize) that the rolltainer 4 is an obstacle. This is because the rolltainer is located in a sensing area of a front sensor, a rear sensor, or a side sensor included in the sensor device 200.

As described above, when the towing-type robot 3 or 400 determines that the rolltainer 4 is an obstacle, the robot 3 or 400 is unable to travel properly.

One method for resolving the above-described problems of the towing-type robot 3 or 400 is as follows.

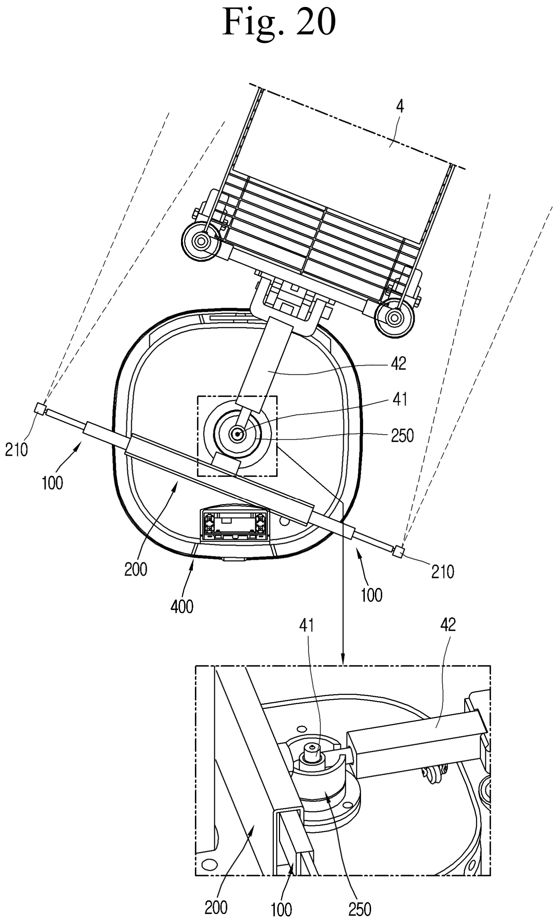

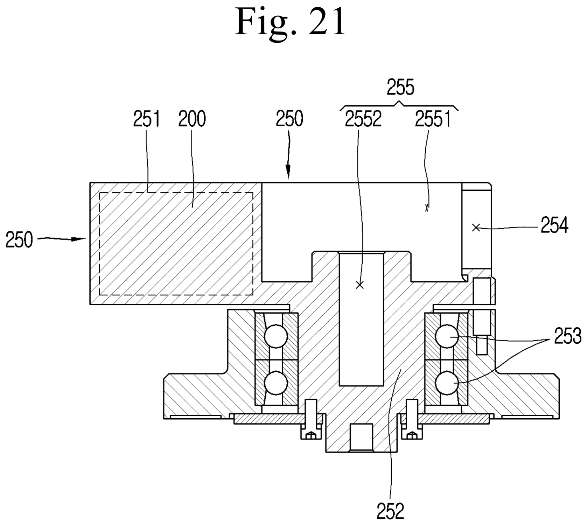

Referring to FIGS. 20 and 21, when the sensor device 200 is disposed on the robot body and the sensor device 200 and the rolltainer 4 move integrally, the rolltainer 4 is not positioned within a sensing area of the obstacle sensor 210 included in the sensor device 200.

The housing 250 of the sensor device 200 included in the robot 400 of the present disclosure is rotatably coupled to the robot body.

The housing 250 of the sensor device 200 includes a sensor device placement portion 251, a housing protrusion 252, a rolltainer connection groove 254, and a rolltainer coupling groove 255 (see FIG. 21). The sensor device placement portion 251, the housing protrusion 252, the rolltainer connection groove 254, and the rolltainer coupling groove 255 are formed integrally.

The sensor device 200 is disposed on the sensor device placement portion 251.

The housing protrusion 252 protrudes from one surface of the housing 250 of the sensor device 200.

The housing protrusion 252 is inserted into a coupling portion provided in the robot body. The coupling portion provided in the robot body is formed as a groove or a hole such that the housing protrusion 252 is inserted.

One or more bearings 253 are disposed between an outer circumferential surface of the housing protrusion 252 and an inner circumferential surface of the coupling portion provided in the robot body. The bearing 253 allows the housing protrusion 252 to smoothly rotate in the coupling portion provided in the robot body. The bearing 253 is a commonly used bearing.

The rolltainer connection groove 254 is formed to be recessed in the vertical direction with an upper side opened.

The rolltainer connection groove 254 is formed at a position facing the sensor device placement portion 251.

A rolltainer connection portion 42 provided on the rolltainer 4 is inserted and disposed in the rolltainer connection groove 254.

The rolltainer connection portion 42 is coupled to the rolltainer 4 and fixed to the rolltainer 4. Accordingly, the rolltainer connection portion 42 moves together as the rolltainer 4 moves. The rolltainer connection portion 42 is formed in a rod shape having a predetermined length. According to examples of implementation states, the rolltainer connection portion 42 may be formed to have stepped portions in a length direction.

When the rolltainer connection portion 42 is inserted into the rolltainer connection groove 254, rotation of the rolltainer connection portion 42 is restricted. This is because movement of the rolltainer connection portion 42 is restricted by side walls surrounding the rolltainer connection groove 254.

When the rolltainer 4 rotates, the rolltainer connection portion 42 presses the side walls of the rolltainer connection groove 254. The pressing causes rotation of the housing protrusion 252.

Specifically, when the rolltainer connection portion 42 rotates due to rotation of the rolltainer 4 in a state in which the rolltainer connection portion 42 is inserted into the rolltainer connection groove 254, the rolltainer connection portion 42 presses the side walls surrounding the rolltainer connection groove 254, and thus the rolltainer connection portion 42 and the housing 250 of the sensor device 200 rotate together.

Since the housing protrusion 252 is capable of rotating while being inserted into the coupling portion provided in the robot body, the housing 250 of the sensor device 200 (specifically, the housing protrusion 252) rotates together with the rolltainer connection portion 42 even when the robot body rotates.

That is, the housing 250 of the sensor device 200 rotates together with the rolltainer 4 via the rolltainer connection portion 42 without being affected by rotation of the robot body.

The rolltainer coupling groove 255 is formed to be recessed in the vertical direction with an upper side opened.

The rolltainer coupling groove 255 communicates with the rolltainer connection groove 254.

A rolltainer coupling portion 41 provided on the rolltainer 4 is inserted and disposed in the rolltainer coupling groove 255. The rolltainer coupling portion 41 is connected to the rolltainer connection portion 42. The rolltainer coupling portion 41 and the rolltainer connection portion 42 are fixed to each other. Accordingly, as the rolltainer connection portion 42 moves, the rolltainer coupling portion 41 also moves together. The rolltainer coupling portion 41 is formed in a rod shape having a predetermined length. According to examples of implementation states, the rolltainer coupling portion 41 may be formed to have stepped portions in a length direction. The length direction of the rolltainer coupling portion 41 and the length direction of the rolltainer connection portion 42 may be orthogonal to each other.

The rolltainer coupling groove 255 may be formed to have different diameters depending on the shape of the rolltainer coupling portion 41. In other words, the rolltainer coupling groove 255 may be formed to include a groove 2551 having a larger diameter and a groove 2552 having a smaller diameter, which communicate with each other.

Another method for resolving the above-described problems of the towing-type robot 3 or 400 is as follows.

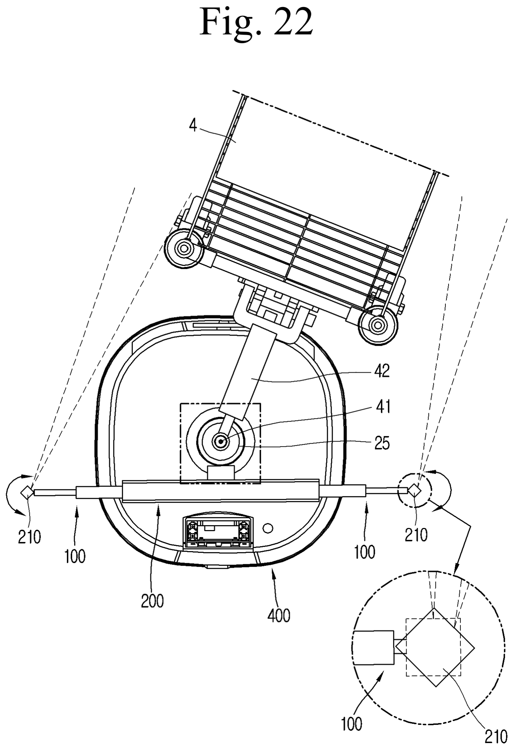

Referring to FIG. 22, the obstacle sensor 210 mounted on an end portion of a moving plate of the length extension module 100 may rotate by driving of a sensor motor (not illustrated).

That is, the robot 400 of the present disclosure includes a sensor motor configured to rotate the obstacle sensor 210.

The sensor motor is a commonly used motor.

Specifically, a sensor motor is mounted on one end portion of the second moving plate 13 or the third moving plate 14 included in the length extension module 100 of the robot 400, and the obstacle sensor 210 is mounted on the sensor motor. The obstacle sensor 210 rotates by driving of the sensor motor.

The towing-type robot 400 (specifically, the controller) may determine (or recognize) a rotation angle of the robot body and/or the rolltainer 4.

The controller is electrically connected to the sensor motor and an angle sensor (not illustrated) included in the robot 400, and controls the sensor motor.

The angle sensor is disposed in a coupling portion of the robot body or a coupling portion of the rolltainer. Data measured by the angle sensor is transmitted to the controller. The controller drives the sensor motor by an amount corresponding to the transmitted angle data, thereby rotating the obstacle sensor 210.

Since the obstacle sensor 210 rotates by an angle corresponding to the rotation angle of the robot body and/or the rolltainer 4, the rolltainer 4 is not positioned in a sensing area of the obstacle sensor 210.

In addition, according to examples of implementation states of the present disclosure, an obstacle detection sensor may be disposed on the robot body (specifically, a front surface of the robot body). The obstacle detection sensor refers to various sensors configured to detect an obstacle.

The obstacle detection sensor may include at least one of a lidar, a camera, an ultrasonic sensor, and the like.

The controller may receive signals output from the obstacle detection sensor disposed on the front surface of the robot body and/or the obstacle sensor 210 disposed in the sensor device 200, and determine whether an obstacle is present in a front, lateral, or rear direction relative to a traveling direction of the robot.

The controller may change the movement direction of the robot according to the presence or absence of the obstacle.

The features, structures, effects, and the like described in the above implementation states are included in at least one implementation state of the present disclosure and are not necessarily limited to only one implementation state. In addition, the features, structures, effects, and the like exemplified in each implementation state may be combined or modified with respect to other implementation states by a person having ordinary skill in the art to which the implementation states belong. Accordingly, contents related to such combinations and modifications should be interpreted as being included in the scope of the present disclosure.

Although the above description has been made with a focus on implementation states, the description is merely exemplary and does not limit the present disclosure. A person having ordinary skill in the art to which the present disclosure belongs may understand that various modifications and applications not exemplified above are possible without departing from essential characteristics of the implementation states of the present disclosure. That is, each component specifically illustrated in the implementation states may be implemented with modification. Such differences related to modifications and applications should be interpreted as being included in the scope of the present disclosure as defined by the appended claims.

## Claims

1. A robot configured to transport a rolltainer, the robot comprising:
a robot body; and
a sensor device disposed on the robot body,
wherein the sensor device comprises:
a length extension module configured to extend a length in one direction; and
an obstacle sensor disposed on the length extension module, and
wherein, when the rolltainer is coupled to the robot body, a driving assembly provided in the sensor device is configured to operate.

2. The robot of claim 1, wherein the length extension module comprises:
a fixing plate;
a first moving plate connected to the fixing plate and configured to move;
a second moving plate connected to the first moving plate and configured to move; and
the driving assembly configured to move the first moving plate in the one direction,
wherein, when the first moving plate moves in the one direction, the second moving plate is configured to move in the one direction.

3. The robot of claim 2, wherein a first moving plate belt assembly is disposed on the first moving plate,
wherein one side of a first moving plate belt provided in the first moving plate belt assembly is connected to the fixing plate, and
wherein the other side of the first moving plate belt is connected to the second moving plate.

4. The robot of claim 3, wherein the first moving plate belt assembly is disposed on a one-side plate of the first moving plate,
wherein the one-side plate of the first moving plate is located between bent portions, and
wherein the bent portions are formed to be spaced apart from an upper end in a vertical direction by a predetermined distance.

5. The robot of claim 2, wherein a fixing plate guide rail is disposed on the fixing plate,
wherein a first moving plate guide block is disposed on the first moving plate, and
wherein the first moving plate guide block is configured to move along the fixing plate guide rail.

6. The robot of claim 2, wherein a first moving plate guide rail is disposed on the first moving plate,
wherein a second moving plate guide block is disposed on the second moving plate, and
wherein the second moving plate guide block is configured to move along the first moving plate guide rail.

7. The robot of claim 2, further comprising a third moving plate connected to the second moving plate and configured to move, and
wherein, when the second moving plate moves in the one direction, the third moving plate is configured to move in the one direction.

8. The robot of claim 7, wherein the obstacle sensor is disposed on one end portion of the second moving plate or one end portion of the third moving plate.

9. The robot of claim 7, wherein a second moving plate belt assembly is disposed on the second moving plate,
wherein one side of a second moving plate belt provided in the second moving plate belt assembly is connected to the first moving plate, and
wherein the other side of the second moving plate belt is connected to the third moving plate.

10. The robot of claim 9, wherein the second moving plate comprises:
a first bent portion;
a second bent portion; and
a third bent portion,
wherein the first bent portion, the second bent portion, and the third bent portion are sequentially formed from an upper side toward a lower side, and
wherein the second moving plate belt assembly is disposed between the third bent portion and a lower end of the second moving plate.

11. The robot of claim 7, wherein a second moving plate guide rail is disposed on the second moving plate,
wherein a third moving plate guide block is disposed on the third moving plate, and
wherein the third moving plate guide block is configured to move along the second moving plate guide rail.

12. The robot of claim 11, wherein the third moving plate comprises:
a first bent portion; and
a second bent portion,
wherein the first bent portion and the second bent portion are sequentially formed from an upper side toward a lower side, and
wherein the third moving plate guide block is disposed between an upper end of the third moving plate and the first bent portion.

13. The robot of claim 2, wherein the driving assembly comprises:
a motor; and
a motor gear connected to a rotation shaft of the motor,
wherein the first moving plate comprises an other-side plate gear connected to the motor gear, and
wherein, when the motor gear rotates by driving of the motor, the other-side plate gear is configured to move in the one direction.

14. The robot of claim 13, wherein the driving assembly further comprises a moving plate gear connected to the motor gear, and
wherein the moving plate gear is configured to mesh with the other-side plate gear.

15. The robot of claim 2, wherein a plurality of length extension modules are provided,
wherein the plurality of length extension modules comprise a first length extension module and a second length extension module,
wherein the first length extension module and the second length extension module are disposed in a vertical direction with a moving plate gear of the driving assembly interposed therebetween, and
wherein, when the moving plate gear rotates, a first moving plate of the first length extension module is configured to move in the one direction, and a first moving plate of the second length extension module is configured to move in a direction opposite to the one direction.

16. The robot of claim 1, wherein the sensor device is rotatably coupled to the robot body,
wherein a housing of the sensor device comprises:
a sensor device placement portion on which the sensor device is disposed;
a housing protrusion rotatably coupled to a coupling portion provided in the robot body; and
a rolltainer connection groove formed at a position facing the sensor device placement portion, wherein a rolltainer connection portion provided in the rolltainer is inserted into the rolltainer connection groove,
wherein, when the rolltainer rotates, the rolltainer connection portion is configured to press side walls of the rolltainer connection groove, and the housing protrusion is configured to rotate by the pressing.

17. The robot of claim 16, wherein one or more bearings are disposed between an outer circumferential surface of the housing protrusion and an inner circumferential surface of the coupling portion provided in the robot body.

18. The robot of claim 1, wherein the sensor device comprises a sensor motor connected to the obstacle sensor, and
wherein the obstacle sensor is configured to rotate by driving of the sensor motor.

19. The robot of claim 1, wherein an obstacle detection sensor is disposed on a front surface of the robot body.
